(19) Europäisches Patentamt
European Patent Office
Office européen des brevets

(11) EP 3 428 207 B1

(12) **EUROPEAN PATENT SPECIFICATION**

(45) Date of publication and mention of the grant of the patent:
**13.11.2019 Bulletin 2019/46**

(21) Application number: **17763303.9**

(22) Date of filing: **08.03.2017**

(51) Int Cl.:
***C09D 175/04*** (2006.01) ***C08G 18/28*** (2006.01)
***C08G 18/62*** (2006.01) ***C08G 18/70*** (2006.01)
***C08G 18/78*** (2006.01) ***C08G 18/79*** (2006.01)
***C08G 18/02*** (2006.01) ***C08G 18/08*** (2006.01)
***C08G 18/09*** (2006.01) ***C08G 18/16*** (2006.01)
***C08G 18/22*** (2006.01) ***C08G 18/24*** (2006.01)
***C08G 18/26*** (2006.01) ***C08G 18/32*** (2006.01)
***C08G 18/34*** (2006.01) ***C08G 18/38*** (2006.01)

(86) International application number:
**PCT/JP2017/009184**

(87) International publication number:
**WO 2017/154963 (14.09.2017 Gazette 2017/37)**

(54) **POLYISOCYANATE COMPOSITION, COATING COMPOSITION, AQUEOUS COATING COMPOSITION, AND COATED SUBSTRATE**

POLYISOCYANATEZUSAMMENSETZUNG, BESCHICHTUNGSZUSAMMENSETZUNG, WÄSSERIGE BESCHICHTUNGSZUSAMMENSETZUNG UND BESCHICHTETE SUBSTRAT

COMPOSITION DE POLYISOCYANATE, COMPOSITION DE REVÊTEMENT, COMPOSITION DE REVÊTEMENT AQUEUX ET SUBSTRAT REVÊTU

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **09.03.2016 JP 2016045987**

(43) Date of publication of application:
**16.01.2019 Bulletin 2019/03**

(73) Proprietor: **ASAHI KASEI KABUSHIKI KAISHA**
**Tokyo 100-0006 (JP)**

(72) Inventors:
- **NAKAJIMA, Kazuko**
  **Tokyo 101-8101 (JP)**
- **KATAGAWA, Hironori**
  **Tokyo 101-8101 (JP)**
- **YAMAUCHI, Masakazu**
  **Tokyo 101-8101 (JP)**

(74) Representative: **Strehl Schübel-Hopf & Partner**
**Maximilianstrasse 54**
**80538 München (DE)**

(56) References cited:
**EP-A1- 0 798 299**
**JP-A- H09 268 212**
**JP-A- 2007 332 193**
**JP-A- 2013 245 341**
**JP-A- 2014 231 599**
**JP-A- 2015 028 163**
**JP-A- 2015 127 368**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).



Printed by Jouve, 75001 PARIS (FR)

## Description

### Technical Field

The present invention relates to a polyisocyanate composition, a coating composition, an aqueous coating composition, and a coated substrate.

### Background Art

Polyisocyanate compositions that are obtained from aliphatic diisocyanates including 1,6-diisocyanatohexane (which may hereinafter be referred to as "HDI" or "hexamethylene diisocyanate") and that contain an isocyanurate structure have been conventionally used in a wide variety of applications due to their excellent weather resistance and heat resistance.

In recent years, two-component urethane coating compositions used as solvent-based paints have been required to be aqueous with increasing interest in global environmental protection. However, polyisocyanates, which are used as curing agents in two-component urethane coating compositions, are poorly dispersible in and highly reactive with water, and their reaction with water produces carbon dioxide. Thus, there have been developed polyisocyanates that have emulsifiability and whose isocyanate groups do not readily react with water even when they are dispersed in water.

For example, Patent Literature 1 discloses a water-dispersible polyisocyanate mixture comprising a polyisocyanate compound containing uretdione groups and a polyether containing ethylene oxide units. Patent Literature 2 and Patent Literature 3 also disclose a water-soluble or water-dispersible aqueous polyisocyanate composition containing uretdione groups.

### Citation List

#### Patent Literature

Patent Literature 1: Japanese Patent Laid-Open No. 05-222150
Patent Literature 2: Japanese Patent Laid-Open No. 07-330861
Patent Literature 3: Japanese Patent Laid-Open No. 2007-332193

### Summary of Invention

#### Technical Problem

Indeed, Patent Literatures 1 to 3 disclose that the use of a polyisocyanate containing uretdione groups improves the dispersibility in water. However, there is a problem in that the use of such a polyisocyanate is limited by the tendency of the diisocyanate monomer concentration to increase during storage.

It is also disclosed that the use of a polyisocyanate containing uretdione groups enhances the adhesion to a substrate. However, the resulting adhesion is still unsatisfactory.

Furthermore, the amount of a polyisocyanate to be mixed with a primary component widely varies from small to large, and when the amount is small, a problem arises in that the isocyanate groups may react with moisture in air because one and the same container needs to be often opened and closed to use the polyisocyanate.

Thus, even the polyisocyanate compositions described in Patent Literatures 1 to 3 are insufficient in terms of the inhibition of increase in diisocyanate monomer concentration during storage, the moisture stability, and the adhesion.

It is therefore an object of the present invention to provide a polyisocyanate composition dispersible in water, having excellent storage stability and moisture stability, and capable of forming a coating with excellent adhesion to a base material.

#### Solution to Problem

The present inventors have completed the present invention on the basis of the finding that a polyisocyanate composition obtained by a reaction between a starting polyisocyanate composition comprising a polyisocyanate having an aliphatic diisocyanate unit and a hydrophilic compound, the polyisocyanate composition having isocyanurate groups, uretdione groups, uretonimino groups, and iminooxadiazinedione groups, and the molar ratio of the uretonimino groups

to the isocyanurate groups and the molar ratio of the iminooxadiazinedione groups to the isocyanurate groups being within specific ranges, has excellent storage stability and moisture stability and is capable of forming a coating with excellent adhesion to a base material.

Specifically, the present invention is as follows.

[1] A polyisocyanate composition obtained by a reaction between a starting polyisocyanate composition comprising a polyisocyanate having an aliphatic diisocyanate unit and a hydrophilic compound,
the polyisocyanate composition comprising an isocyanurate group, an uretdione group, an uretonimino group, and an iminooxadiazinedione group, wherein
the molar ratio of the uretonimino group to the isocyanurate group is 0.0010 or more and 0.0050 or less, and the molar ratio of the iminooxadiazinedione group to the isocyanurate group is 0.00050 or more and 0.30 or less.
[2] The polyisocyanate composition according to [1], wherein the hydrophilic compound is at least one selected from the group consisting of an anionic compound, a cationic compound, and a nonionic compound.
[3] The polyisocyanate composition according to [2], wherein
the hydrophilic compound comprises the anionic compound, and
the anionic compound is at least one selected from the group consisting of a carboxylic acid group-containing compound, a phosphoric acid group-containing compound, and a sulfonic acid group-containing compound.
[4] The polyisocyanate composition according to [3], wherein the anionic compound comprises the sulfonic acid group-containing compound, and
the sulfonic acid group-containing compound is at least one selected from the group consisting of a hydroxy group-containing sulfonic acid and an amino group-containing sulfonic acid.
[5] The polyisocyanate composition according to [2], wherein
the hydrophilic compound comprises the nonionic compound, and
the nonionic compound is a polyalkylene glycol alkyl ether having a structure represented by following general formula (1):

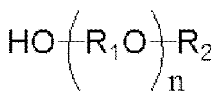

(1)

wherein $R_1$ represents an alkylene group having 1 to 4 carbon atoms, $R_2$ represents an alkyl group having 1 to 4 carbon atoms, and an average of n is 5.0 or more and 20 or less.
[6] The polyisocyanate composition according to [5], wherein, in general formula (1), $R_1$ represents an alkylene group having two carbon atoms and $R_2$ represents an alkyl group having one carbon atom.
[7] The polyisocyanate composition according to [5] or [6], wherein a moiety derived from the polyalkylene glycol alkyl ether is comprised in an amount of 2.0 mass% or more and 30 mass% or less based on a total amount of the polyisocyanate composition.
[8] The polyisocyanate composition according to any of [1] to [7], wherein the aliphatic diisocyanate unit comprises a 1,6-diisocyanatohexane unit.
[9] A coating composition comprising the polyisocyanate composition according to any of [1] to [8].
[10] An aqueous coating composition comprising the coating composition according to [9] and water.
[11] A coated substrate comprising a substrate and the coating composition according to [9] or the aqueous coating composition according to [10], the coating composition or the aqueous coating composition coating the substrate.

## Advantageous Effect of Invention

The polyisocyanate composition according to the present invention is dispersible in water, has excellent storage stability and moisture stability, and is capable of forming a coating with excellent adhesion to a base material.

## Description of Embodiments

An embodiment of the present invention (which will be simply referred to as "present embodiment" hereinafter) will now be described in detail. The present embodiment described below is an example for illustrating the present invention and is not intended to limit the present invention to the following description. The term "(meth)acryl" encompasses methacryl and acryl, and the term "(meth)acrylate" encompasses methacrylate and acrylate, unless otherwise specified.

[Polyisocyanate composition]

The polyisocyanate composition of the present embodiment is obtained by a reaction between a starting polyisocyanate composition comprising a polyisocyanate having an aliphatic diisocyanate unit and a hydrophilic compound (the polyisocyanate composition used as a starting material for the polyisocyanate composition of the present embodiment may hereinafter be referred to as "starting polyisocyanate composition" to distinguish between the polyisocyanate composition used as a starting material and the polyisocyanate composition of the present embodiment). The polyisocyanate composition of the present embodiment comprises isocyanurate groups, uretdione groups, uretonimino groups, and iminooxadiazinedione groups. Furthermore, the molar ratio of the uretonimino groups to the isocyanurate groups is 0.0010 or more and 0.0050 or less, and the molar ratio of the iminooxadiazinedione groups to the isocyanurate groups is 0.00050 or more and 0.30 or less. The polyisocyanate composition of the present embodiment has the above features, by virtue of which it is dispersible in water, has excellent storage stability and moisture stability, and is capable of forming a coating with excellent adhesion to a base material.

The polyisocyanate composition of the present embodiment may comprise the starting polyisocyanate composition unreacted with the hydrophilic compound (such a starting polyisocyanate composition may hereinafter be referred to as "unreacted starting polyisocyanate composition") and the hydrophilic compound unreacted with the starting polyisocyanate composition (such a hydrophilic compound may hereinafter be referred to as "unreacted hydrophilic compound"). The various physical properties or characteristics described below for the polyisocyanate composition of the present embodiment are those of the polyisocyanate composition of the present embodiment which comprises a polyisocyanate obtained by a reaction between the polyisocyanate contained in the starting polyisocyanate composition and the hydrophilic compound (the obtained polyisocyanate may hereinafter be referred to as "modified polyisocyanate"), the unreacted starting polyisocyanate, and the unreacted hydrophilic compound, unless otherwise specified.

The ratio between the unreacted starting polyisocyanate and the modified polyisocyanate in the polyisocyanate composition of the present embodiment can be determined by measurement using liquid chromatography.

Thus, the polyisocyanate composition of the present embodiment comprises a modified polyisocyanate having a structural unit derived from the polyisocyanate contained in the starting polyisocyanate composition and a structural unit derived from the hydrophilic compound. In the polyisocyanate composition, the average number of isocyanate functional groups is preferably more than 1.0 and not more than 5.0.

The polyisocyanate composition of the present embodiment comprises isocyanurate groups. The isocyanurate group, which is one of the components of the polyisocyanate composition of the present embodiment, is a functional group derived from a polyisocyanate composed of three molecules of a diisocyanate monomer and is represented by the following general formula (II).

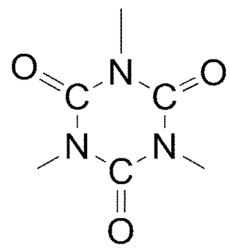

(I I)

The concentration of a trimer composed of three HDI molecules linked via isocyanurate bonds (this trimer may hereinafter be referred to as "isocyanurate trimer") in the polyisocyanate composition of the present embodiment is preferably, but not limited to, 30 mass% or more and 90 mass% or less, and more preferably 40 mass% or more and 90 mass% or less. The above concentration is preferably 30 mass% or more in terms of improving the crosslinkability of a coating, and is preferably 90 mass% or less in terms of reducing the viscosity of the polyisocyanate composition of the present embodiment. The concentration of the isocyanurate trimer can be measured by gel permeation chromatography (which may hereinafter be referred to as "GPC").

The polyisocyanate composition of the present embodiment comprises uretdione groups. This can reduce the viscosity of the composition. The uretdione group, which is one of the components of the polyisocyanate composition of the present embodiment, is a functional group derived from a polyisocyanate composed of two molecules of a diisocyanate monomer and is represented by the following formula (III).

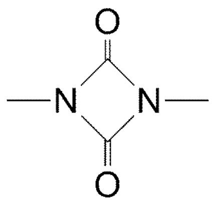

(III)

The molar ratio of the uretdione groups to the isocyanurate groups (this ratio may hereinafter be expressed as "uretdione groups/isocyanurate groups") in the polyisocyanate composition of the present embodiment is preferably, but not limited to, 0.010 or more and 0.50 or less. The lower limit of the molar ratio is more preferably 0.15, even more preferably 0.20, and still even more preferably 0.30. The upper limit of the molar ratio is more preferably 0.45, even more preferably 0.40, and still even more preferably 0.38. The molar ratio is preferably 0.010 or more in terms of reducing the viscosity of the polyisocyanate composition of the present embodiment, and is preferably 0.50 or less in terms of improving the crosslinkability. The molar ratio uretdione groups/isocyanurate groups can be determined by $^{13}C$-NMR spectroscopy. Specifically, the molar ratio can be measured by the method described in Examples below.

Examples of methods for controlling the molar ratio uretdione groups/isocyanurate groups within the range from 0.010 to 0.50 include: a method in which the molar ratio is controlled by, in production of the starting polyisocyanate composition, carrying out isocyanurate formation reaction of 1,6-diisocyanatohexane, followed by deactivation of the catalyst and then by reaction at about 140 to 160°C, more preferably at 145 to 165°C, preferably for about several hours, more preferably for 1 hour to 3 hours; and a method in which a polyisocyanate composition obtained by carrying out isocyanurate formation reaction of 1,6-diisocyanatohexane is partially mixed with a polyisocyanate composition obtained by adding a uretdione formation catalyst such as a tertiary phosphine to 1,6-diisocyanatohexane and allowing the reaction to proceed at about 20 to 80°C for about several hours to several tens of hours. Of the above methods, the former method in which isocyanurate formation reaction of 1,6-diisocyanatohexane is followed by deactivation of the catalyst and then by reaction at about 145 to 165°C for about several hours is preferred in terms of availability.

The polyisocyanate composition of the present embodiment comprises uretonimino groups. The uretonimino group, which is one of the components of the polyisocyanate composition of the present embodiment, is a functional group derived from a polyisocyanate composed of three molecules of a diisocyanate monomer and is represented by the following formula (IV).

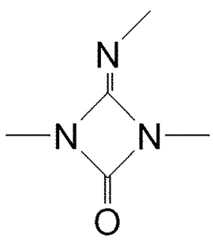

(IV)

The molar ratio of the uretonimino groups to the isocyanurate groups (this ratio may hereinafter be expressed as "uretonimino groups/isocyanurate groups") in the polyisocyanate composition of the present embodiment is 0.0010 or more and 0.0050 or less. The lower limit of the molar ratio is preferably 0.0012, more preferably 0.0015, and even more preferably 0.0020. The upper limit of the molar ratio is preferably 0.0045, more preferably 0.0040, and even more preferably 0.0035. Thanks to the fact that the molar ratio is 0.0010 or more, the polyisocyanate composition of the present embodiment has high moisture stability and adhesion. Thanks to the fact that the molar ratio is 0.0050 or less, the increase in diisocyanate monomer concentration as a result of storage can be inhibited. The molar ratio uretonimino groups/isocyanurate groups can be measured by the method described in Examples below.

Examples of methods for controlling the molar ratio uretonimino groups/isocyanurate groups within the range from 0.0010 to 0.0050 include: a method in which the molar ratio is controlled by, in production of the starting polyisocyanate composition, carrying out isocyanurate formation reaction of 1,6-diisocyanatohexane, followed by deactivation of the catalyst and then by reaction at about 140 to 160°C, more preferably at 145 to 155°C, preferably for about several hours, more preferably for 1 hour to 3 hours; and a method in which a polyisocyanate composition obtained as above is partially mixed with a polyisocyanate composition obtained by reacting 1,6-diisocyanatohexane using as a catalyst a hetero ring-containing phosphorus compound such as 1-butylphosphorane at about 20 to 80°C for about several hours to several tens of hours. Of the above methods, the former method in which isocyanurate formation reaction of 1,6-diisocyanatohexane is followed by deactivation of the catalyst and then by reaction at about 140 to 160°C for about several hours is preferred in terms of availability.

The polyisocyanate composition of the present embodiment comprises iminooxadiazinedione groups. The iminooxadiazinedione group, which is one of the components of the polyisocyanate composition of the present embodiment, is a functional group derived from a polyisocyanate composed of three molecules of a diisocyanate monomer and is represented by the following formula (V).

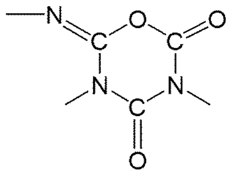
(V)

The molar ratio of the iminooxadiazinedione groups to the isocyanurate groups (this ratio may hereinafter be expressed as "iminooxadiazinedione groups/isocyanurate groups") in the polyisocyanate composition of the present embodiment is 0.00050 or more and 0.30 or less. The lower limit of the molar ratio is preferably 0.0010, more preferably 0.0015, even more preferably 0.0020, and still even more preferably 0.0025. The upper limit of the molar ratio is preferably 0.20, more preferably 0.10, even more preferably 0.050, and still even more preferably 0.025. Thanks to the fact that the molar ratio is 0.00050 or more, the polyisocyanate composition of the present embodiment can exhibit moisture stability. Thanks to the fact that the molar ratio is 0.30 or less, the polyisocyanate composition of the present embodiment is capable of forming a coating with excellent adhesion to a base material. The molar ratio iminooxadiazinedione groups/isocyanurate groups can be measured by the method described in Examples below.
Examples of methods for controlling the molar ratio iminooxadiazinedione groups/isocyanurate groups within the range from 0.00050 to 0.30 include: a method in which the molar ratio is controlled by carrying out isocyanurate formation reaction of 1,6-diisocyanatohexane, followed by deactivation of the catalyst and then by reaction at about 140 to 160°C for about several hours; and a method in which a polyisocyanate composition obtained as above is partially mixed with a polyisocyanate composition obtained by reacting 1,6-diisocyanatohexane using as a catalyst a hetero ring-containing phosphorus compound such as 1-butylphosphorane at about 20 to 80°C for about several hours to several tens of hours. Of the above methods, the former method in which isocyanurate formation reaction of 1,6-diisocyanatohexane is followed by deactivation of the catalyst and then by reaction at about 140 to 160°C for about several hours is preferred in terms of availability.
The polyisocyanate composition of the present embodiment may further comprise allophanate groups. The allophanate group is formed from a hydroxy group of an alcohol and an isocyanate group and is represented by the following formula (VI).

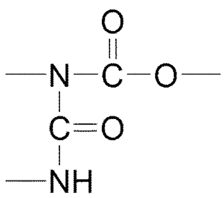
(VI)

The alcohol which may be used for the polyisocyanate composition of the present embodiment is preferably an alcohol consisting only of carbon, hydrogen, and oxygen, more preferably a monoalcohol, and even more preferably a monoalcohol having a molecular weight of 200 or less. Examples of the alcohol include, but are not limited to: monoalcohols such as methanol, ethanol, propanol, butanol, pentanol, hexanol, heptanol, octanol, and nonanol; and dialcohols such as ethylene glycol, 1,3-butanediol, neopentyl glycol, and 2-ethylhexanediol. One of these may be used alone, or two or more thereof may be used in combination.
The molar ratio of the allophanate groups to the isocyanurate groups (this ratio may hereinafter be expressed as "allophanate groups/isocyanurate groups") in the polyisocyanate composition of the present embodiment is preferably 0.010 or more and 0.50 or less, more preferably 0.010 or more and 0.20 or less, and even more preferably 0.010 or more and 0.10 or less. The molar ratio allophanate groups/isocyanurate groups is preferably 0.50 or less in terms of improving the crosslinkability. The molar ratio allophanate groups/isocyanurate groups can be measured by the method described in Examples below.
The polyisocyanate composition of the present embodiment may further comprise urethane groups, urea groups, biuret groups, carbodiimide groups or the like in addition to the above-described isocyanurate groups, uretdione groups, uretonimino groups, iminooxadiazinedione groups, and allophanate groups.
The diisocyanate monomer concentration in the polyisocyanate composition of the present embodiment is

preferably 1.0 mass% or less, more preferably 0.5 mass% or less, even more preferably 0.3 mass%, and still even more preferably 0.2 mass%. When the diisocyanate monomer concentration is 1.0 mass% or less, the crosslinkability tends to be further improved. The diisocyanate monomer concentration in the polyisocyanate composition of the present embodiment can be measured by a method according to the HDI monomer mass concentration measurement described below.

The viscosity at 25°C of the polyisocyanate composition of the present embodiment is preferably, but not limited to, 100 mPa·s or more and 2000 mPa·s or less. The lower limit of the viscosity is more preferably 140 mPa·s, even more preferably 180 mPa·s, still even more preferably 200 mPa·s, and still even more preferably 220 mPa·s. The upper limit of the viscosity is more preferably 1800 mPa·s, even more preferably 1500 mPa·s, still even more preferably 1200 mPa·s, and still even more preferably 1000 mPa·s. When the viscosity is 100 mPa·s or more, the crosslinkability tends to be further improved. When the viscosity is 2000 mPa·s or less, the water dispersibility, and the solids concentration in a paint including the polyisocyanate composition, tend to be further increased.

Specific examples of methods for controlling the viscosity at 25°C within the above range include: adjusting the mixing ratio between the polyisocyanate and the hydrophilic compound; using a polyisocyanate having a viscosity within an appropriate range as a starting material to be modified; and adjusting the degree of conversion in production of the polyisocyanate as a starting material. The viscosity of the polyisocyanate composition of the present embodiment can be determined by purifying the polyisocyanate composition to a non-volatile content of 98 mass% or more and measuring the viscosity of the purified polyisocyanate composition with an E-type viscometer (manufactured by TOKIMEC INC.). Specifically, the viscosity can be measured by the method described in Examples below.

The isocyanate group content of the polyisocyanate composition of the present embodiment, as determined when the non-volatile content of the composition is substantially 100 mass%, is preferably 10 mass% or more, more preferably 15 mass% or more, and even more preferably 16 mass% or more, in terms of the crosslinkability and the coating physical properties. When the isocyanate group content is 10 mass% or more, the amount of isocyanate groups to be involved in crosslinking is large, and the mobility of polyisocyanate molecules during curing is high. This provides enhanced crosslinkability, which tends to improve the coating physical properties. The term "isocyanate groups" refer to the total isocyanate groups in the polyisocyanate composition. In terms of lowering the diisocyanate monomer concentration, the isocyanate group content is preferably 25 mass% or less, more preferably 24 mass% or less, and even more preferably 23 mass% or less.

Examples of methods for controlling the isocyanate group content within the above range include, but are not limited to, adjustment of the mixing ratio between the polyisocyanate and the hydrophilic compound. The isocyanate group content is measured by the method described in Examples.

The non-volatile content in the polyisocyanate composition corresponds to the ratio (%) of the mass of the composition after heating to the mass of the composition before heating, and is preferably 10% or more and 100% or less and more preferably 50% or more and 100% or less. When the non-volatile content is 10% or more, the polyisocyanate composition has a decreased viscosity and thus tends to be easy to handle. When the non-volatile content is 100% or less, the amount of an organic solvent to be used can be reduced so that environmental friendliness tends to be improved.

Examples of methods for controlling the non-volatile content within the above range include, but are not limited to, adjustment of the mixing ratio between the polyisocyanate composition and the solvent. The non-volatile content is measured by the method described in Examples.

The polyisocyanate composition of the present embodiment may comprise a component (additional component) other than the modified polyisocyanate, unreacted polyisocyanate, and unreacted hydrophilic compound which are described above. Examples of the additional component include a solvent, an antioxidant, a light stabilizer, a polymerization inhibitor, and a surfactant.

The content of the solvent is preferably 0 mass% or more and 90 mass% or less, more preferably 0 mass% or more and 50 mass% or less, and even more preferably 0 mass% or more and 30 mass% or less, based on the total amount (100 mass%) of the polyisocyanate composition. The contents of the antioxidant, light stabilizer, polymerization inhibitor, and surfactant are preferably each independently 0 mass% or more and 10 mass% or less, more preferably each independently 0 mass% or more and 5.0 mass% or less, and even more preferably each independently 0 mass% or more and 2.0 mass% or less, based on the total amount (100 mass%) of the polyisocyanate composition.

[Starting polyisocyanate composition]

The starting polyisocyanate composition of the present embodiment comprises a polyisocyanate having an aliphatic diisocyanate unit. The aliphatic diisocyanate preferably comprises 1,6-diisocyanatohexane (HDI). The term "unit" as used herein refers to a structural unit of a polyisocyanate obtained using a compound as a monomer. For example, a "1,6-diisocyanatohexane unit" is a 1,6-diisocyanatohexane-derived structural unit of a polyisocyanate obtained using 1,6-diisocyanatohexane as a monomer. The starting polyisocyanate composition is preferably free of an unreacted monomer (an aliphatic diisocyanate such as HDI), although the starting polyisocyanate composition may

comprise such an unreacted monomer.

The aliphatic diisocyanate is preferably, but not limited to, an aliphatic diisocyanate having 4 to 30 carbon atoms. Examples of the aliphatic diisocyanate having 4 to 30 carbon atoms include HDI and further include 1,4-diisocyanatobutane, 1,5-diisocyanatopentane, 2,2,4-trimethyl-1,6-diisocyanatohexane, and lysine diisocyanate. In terms of industrial availability and reactivity during polyisocyanate production, a starting polyisocyanate composition obtained from an aliphatic diisocyanate comprising HDI is preferred for the present embodiment. One aliphatic diisocyanate may be used alone, or two or more aliphatic diisocyanates may be used in combination.

The starting polyisocyanate composition of the present embodiment may comprise an alicyclic diisocyanate unit. The alicyclic diisocyanate is preferably, but not limited to, an alicyclic diisocyanate having 8 to 30 carbon atoms. Examples of the alicyclic diisocyanate having 8 to 30 carbon atoms include isophorone diisocyanate (which may hereinafter be referred to as "IPDI"), 1,3-bis(isocyanatomethyl)-cyclohexane, 4,4'-dicyclohexylmethane diisocyanate, norbornene diisocyanate, and hydrogenated xylylene diisocyanate. Among these, IPDI is preferred in terms of weather resistance and industrial availability. One alicyclic diisocyanate may be used alone, or two or more alicyclic diisocyanates may be used in combination.

[Method for producing starting polyisocyanate composition]

Hereinafter, an exemplary method for producing the starting polyisocyanate composition of the present embodiment will be described. At least HDI (1,6-diisocyanatohexane) is used as a primary material for producing the starting polyisocyanate composition. The starting polyisocyanate composition can be obtained by carrying out isocyanurate formation reaction for forming isocyanurate groups derived from isocyanate groups, uretdione formation reaction for forming uretdione groups, uretonimine formation reaction for forming uretonimino groups, and iminooxadiazinedione formation reaction for forming iminooxadiazinedione groups in the presence of an excess of diisocyanate monomer and by removing the unreacted diisocyanate monomer after the reactions. The reactions may be carried out individually and sequentially, or some of the reactions may be carried out simultaneously. Alternatively, the starting polyisocyanate composition may be obtained by carrying out the four reactions separately and mixing the separately-formed products. In terms of availability, the method in which the four reactions are performed individually and sequentially and the method in which some of the four reactions are carried out simultaneously are preferred. An alcohol compound such as an alkyl monoalcohol or alkyl diol may be further used as an auxiliary material. When an alcohol compound is used, the alcohol compound is preferably used in such a way that the molar ratio allophanate groups/isocyanurate groups in the polyisocyanate composition will be 0.010 or more and 0.20 or less as described above.

Preferably, the polyisocyanate composition is obtained by adding a polymerization catalyst to the HDI as a primary material or the auxiliary material as described above, allowing the reaction to proceed until a predetermined degree of polymerization is reached, and then, if necessary, removing the unreacted HDI.

When an isocyanurate group-containing polyisocyanate is derived from a diisocyanate monomer, in general, an isocyanurate formation reaction catalyst is used. The isocyanurate formation reaction catalyst is preferably one having basicity. Specific examples of such an isocyanurate formation reaction catalyst are listed in 1) to 7) below.

1) Hydroxides of tetraalkylammoniums such as tetramethylammonium and tetraethylammonium, and salts of the tetraalkylammoniums with weak organic acids such as acetic acid and capric acid
2) Hydroxides of hydroxyalkylammoniums such as trimethylhydroxypropylammonium, trimethylhydroxyethylammonium, triethylhydroxypropylammonium, and triethylhydroxyethylammonium and salts of the hydroxyalkylammoniums with weak organic acids such as acetic acid and capric acid
3) Salts of alkyl carboxylic acids such as acetic acid, caproic acid, octylic acid, and myristic acid with metals such as tin, zinc, lead, sodium, and potassium
4) Alcoholates of metals such as sodium and potassium
5) Aminosilyl group-containing compounds such as hexamethyldisilazane
6) Mannich bases
7) Combinations of tertiary amines with epoxy compounds

In terms of the catalytic efficiency, the catalysts listed in 1), 2), and 3) are preferred. More preferred are the weak organic acid salts listed in 1).

It is preferable that the catalyst as described above be used in an amount of 10 mass ppm or more and 1000 mass ppm or less, more preferably in an amount of 10 mass ppm or more and 500 mass ppm or less, even more preferably in an amount of 10 mass ppm or more and 100 mass ppm or less, based on the mass of the diisocyanate placed beforehand, and the isocyanurate formation reaction be carried out at a temperature of 50 to 120°C. The lower limit of the reaction temperature is more preferably 54°C, even more preferably 57°C, and still even more preferably 60°C. The upper limit of the reaction temperature is more preferably 100°C, even more preferably 90°C, and still even

more preferably 80°C. When the isocyanurate formation reaction temperature is 120°C or lower, a property change such as coloration tends to be prevented.

The uretdione groups present in the starting polyisocyanate composition can be obtained by using a uretdione formation reaction catalyst. Specific examples of compounds which may be used as the uretdione formation reaction catalyst include, but are not limited to, tertiary phosphines such as: trialkylphosphines such as tri-n-butylphosphine and tri-n-octylphosphine; tris(dialkylamino)phosphines such as tris-(dimethylamino)phosphine; and cycloalkylphosphines such as cyclohexyl-di-n-hexylphosphine. Since many of these compounds also promote isocyanurate formation reaction, the use of these compounds results in not only production of a uretdione group-containing polyisocyanate but also production of an isocyanurate group-containing polyisocyanate. At the time when a desired yield is reached, a deactivating agent for deactivating the uretdione formation reaction catalyst, such as phosphoric acid or methyl p-toluenesulfonate, is added to terminate the uretdione formation reaction. It is preferable that the catalyst as described above be used in an amount of 10 mass ppm or more and 10000 mass ppm or less, more preferably in an amount of 10 mass ppm or more and 1000 mass ppm or less, even more preferably in an amount of 10 mass ppm or more and 500 mass ppm or less, based on the mass of the diisocyanate placed beforehand, and the uretdione formation reaction be carried out at a temperature of 20 to 120°C. The lower limit of the reaction temperature is more preferably 25°C, even more preferably 30°C, and still even more preferably 35°C. The upper limit of the reaction temperature is more preferably 110°C, even more preferably 100°C, and still even more preferably 90°C. When the uretdione formation reaction temperature is 120°C or lower, a property change such as coloration tends to be prevented.

Alternatively, the uretdione groups can be obtained by heating a diisocyanate monomer without using the uretdione formation reaction catalyst as described above. The heating temperature is preferably 130°C to 180°C. The lower limit of the heating temperature is more preferably 140°C, even more preferably 145°C, still even more preferably 150°C, and still even more preferably 155°C. The upper limit of the heating temperature is more preferably 170°C, even more preferably 165°C, still even more preferably 162°C, and still even more preferably 160°C. The heating time is preferably 0.2 Hr to 8.0 Hr. The lower limit of the heating time is more preferably 0.4 Hr, even more preferably 0.6 Hr, still even more preferably 0.8 Hr, and still even more preferably 1.0 Hr. The upper limit of the heating time is more preferably 6.0 Hr, even more preferably 4.0 Hr, still even more preferably 3.0 Hr, and still even more preferably 2.0 Hr. When the heating time is 0.2 Hr or more, the lowering of viscosity tends to be achieved. When the heating time is 8.0 Hr or less, coloration of the polyisocyanate itself tends to be prevented.

When the polyisocyanate composition of the present embodiment is obtained without the use of any uretdione formation reaction catalyst, uretdione formation reaction induced only by heating and isocyanurate formation reaction as previously described may be performed, and after the completion of the reactions, the unreacted diisocyanate monomer may be removed. This is preferable in terms of lowering the unreacted diisocyanate monomer concentration, reducing the amount of change in molecular weight as a result of storage of the obtained polyisocyanate composition, and reducing the degree of yellowing which can occur during high-temperature baking.

The uretonimino groups present in the starting polyisocyanate composition can be obtained by a reaction using a uretonimine formation reaction catalyst. Specific examples of compounds which may be used as the uretonimine formation reaction catalyst include, but are not limited to, hetero ring-containing phosphorus compounds such as 1-methyl-1-phosphorane, 1-ethyl-1-phosphorane, 1-propyl-1-phosphorane, 1-butyl-1-phosphorane, 1-pentyl-1-phosphorane, 1-hexyl-1-phosphorane, 1-octyl-1-phosphorane, 9-methyl-9-phosphabicyclononane, 9-ethyl-9-phosphabicyclononane, 9-propyl-9-phosphabicyclononane, 9-butyl-9-phosphabicyclononane, 9-pentyl-9-phosphabicyclononane, 9-hexyl-9-phosphabicyclononane, 9-octyl-9-phosphabicyclononane, 9-dodecyl-9-phosphabicyclononane, and 9-eicosyl-9-phosphabicyclononane. Since many of these compounds also promote isocyanurate formation reaction and uretdione formation reaction, the use of these compounds results in not only production of a uretonimino group-containing polyisocyanate but also production of an isocyanurate group-containing polyisocyanate and uretdione group-containing polyisocyanate. At the time when a desired yield is reached, a deactivating agent for deactivating the uretonimine formation reaction catalyst, such as phosphoric acid, methyl toluenesulfonate, acid chloride, or sulfur, is added to terminate the uretonimine formation reaction. It is preferable that the catalyst as described above be used in an amount of 10 mass ppm or more and 10000 mass ppm or less, more preferably in an amount of 10 mass ppm or more and 1000 mass ppm or less, even more preferably in an amount of 10 mass ppm or more and 500 mass ppm or less, based on the mass of the diisocyanate placed beforehand, and the uretonimine formation reaction be carried out at a temperature of 20 to 120°C. The lower limit of the reaction temperature is more preferably 25°C, even more preferably 30°C, and still even more preferably 35°C. The upper limit of the reaction temperature is more preferably 110°C, even more preferably 100°C, and still even more preferably 90°C. When the uretonimine formation reaction temperature is 120°C or lower, a property change such as coloration tends to be prevented.

Alternatively, the uretonimino groups can be obtained by heating a diisocyanate monomer without using the uretonimine formation reaction catalyst as described above. The heating temperature is preferably 130°C to 180°C. The lower limit of the heating temperature is more preferably 140°C, even more preferably 145°C, still even more preferably 150°C, and still even more preferably 155°C. The upper limit of the heating temperature is more preferably 170°C, even

more preferably 165°C, still even more preferably 162°C, and still even more preferably 160°C. When the heating temperature is 120°C or higher, the uretonimine formation reaction tends to proceed efficiently. When the heating temperature is 180°C or lower, coloration of the polyisocyanate itself tends to be prevented. When the heating temperature is set as described above, the heating time is preferably 0.2 Hr to 8.0 Hr. The lower limit of the heating time is more preferably 0.4 Hr, even more preferably 0.6 Hr, still even more preferably 0.8 Hr, and still even more preferably 1.0 Hr. The upper limit of the heating time is more preferably 6.0 Hr, even more preferably 5.0 Hr, still even more preferably 4.0 Hr, and still even more preferably 3.0 Hr. When the heating time is 0.2 Hr or more, the lowering of viscosity tends to be achieved. When the heating time is 8.0 Hr or less, coloration of the polyisocyanate itself tends to be prevented. Furthermore, the rate at which the temperature is increased or decreased to the uretonimine formation reaction temperature is preferably 0.5°C/min to 2.5°C/min. The lower limit of the rate is more preferably 0.6°C/min, even more preferably 0.8°C/min, and still even more preferably 1.0°C/min. The upper limit of the rate is more preferably 2.3°C/min, even more preferably 2.15°C/min, and still even more preferably 2.0°C/min. When the rate of temperature increase or decrease is 0.5°C/min or higher, the production tends to be completed in a short time. When the rate is 2.5°C/min or lower, the uretonimine formation reaction tends to proceed efficiently. When the polyisocyanate composition of the present embodiment is obtained without the use of any uretonimine formation reaction catalyst, uretonimine formation reaction induced only by heating, isocyanurate formation reaction as previously described, and uretdione formation reaction as previously described may be performed, and after the completion of the reactions, the unreacted diisocyanate monomer may be removed. This is preferable in terms of lowering the unreacted diisocyanate monomer concentration and reducing the increase in amount of diisocyanate monomer as a result of storage of the obtained polyisocyanate composition.

The allophanate groups present in the starting polyisocyanate composition can be obtained by using an alcohol compound such as an alkyl monoalcohol or alkyl diol in combination with HDI and using an allophanate formation reaction catalyst. Preferred examples of the alcohol compound which may be used in the present embodiment include, but are not limited to, alcohols consisting only of carbon, hydrogen, and oxygen, and more preferred are monoalcohols. Even more preferred are alcohols having a molecular weight of 200 or less. Specific examples of such compounds include: monoalcohols such as methanol, ethanol, propanol, butanol, isobutanol, pentanol, hexanol, heptanol, octanol, and nonanol; and dialcohols such as ethylene glycol, 1,3-butanediol, neopentyl glycol, and 2-ethylhexanediol. Two or more of these alcohols may be used in combination. The amount of the alcohol compound to be added, as expressed by the equivalent ratio between the isocyanate groups of HDI and the hydroxy groups of the alcohol compound, is preferably, but not limited to, 1000/1 or more and 10/1 or less and more preferably 1000/1 or more and 100/1 or less. When the equivalent ratio is 10/1 or more, the desired average number of isocyanate groups tends to be achieved. Specific examples of compounds which may be used as the allophanate formation reaction catalyst include, but are not limited to, alkyl carboxylic acid salts of tin, lead, zinc, bismuth, zirconium, and zirconyl such as: organotin compounds such as tin 2-ethylhexanoate and dibutyltin dilaurate; organolead compounds such as lead 2-ethylhexanoate; organozinc compounds such as zinc 2-ethylhexanoate; bismuth 2-ethylhexanoate; zirconium 2-ethylhexanoate; and zirconyl 2-ethylhexanoate.

At the time when a desired yield is reached, a deactivating agent for deactivating the allophanate formation reaction catalyst, such as phosphoric acid or methyl p-toluenesulfonate, is added to terminate the allophanate formation reaction. It is preferable that the catalyst as described above be used in an amount of 10 mass ppm or more and 10000 mass ppm or less, more preferably in an amount of 10 mass ppm or more and 1000 mass ppm or less, even more preferably in an amount of 10 mass ppm or more and 500 mass ppm or less, based on the mass of the diisocyanate placed beforehand, and the allophanate formation reaction be carried out at a temperature of 60 to 160°C. The lower limit of the reaction temperature is more preferably 70°C, even more preferably 80°C, and still even more preferably 90°C. The upper limit of the reaction temperature is more preferably 155°C, even more preferably 150°C, and still even more preferably 145°C. When the allophanate formation reaction temperature is 160°C or lower, a property change such as coloration tends to be prevented. The heating time is preferably 0.2 Hr to 8.0 Hr. The lower limit of the heating time is more preferably 0.4 Hr, even more preferably 0.6 Hr, still even more preferably 0.8 Hr, and still even more preferably 1.0 Hr. The upper limit of the heating time is more preferably 6.0 Hr, even more preferably 4.0 Hr, still even more preferably 3.0 Hr, and still even more preferably 2.0 Hr. When the heating time is 0.2 Hr or more, the lowering of viscosity tends to be achieved. When the heating time is 8.0 Hr or less, coloration of the polyisocyanate itself tends to be prevented.

The isocyanurate formation reaction catalyst previously described can also serve as an allophanate formation reaction catalyst. When the allophanate formation reaction is carried out using the isocyanurate formation reaction catalyst previously described, an isocyanurate group-containing polyisocyanate is also produced. In terms of economical production, it is preferable to carry out the allophanate formation reaction and isocyanurate formation reaction using the previously described isocyanurate formation reaction catalyst as the allophanate formation reaction catalyst.

The isocyanurate formation reaction, uretdione formation reaction, and uretonimine formation reaction, which are described above, may be performed individually and sequentially, or some of the reactions may be performed simultaneously. When the allophanate formation reaction is also carried out, it is preferable to first perform the isocyanurate formation reaction and allophanate formation reaction simultaneously and then perform the uretdione formation

reaction and uretonimine formation reaction. The isocyanurate formation reaction and allophanate formation reaction may be performed simultaneously using a single catalyst involved in both of the reactions, and then the heat-induced uretdione formation reaction and uretonimine formation reaction may be performed. This is more preferable because the production process can be simplified.

The polymerization reaction is terminated at the time when a desired degree of polymerization is reached. The termination of the polymerization reaction can be accomplished, for example, but not limited to, by adding an acid compound such as phosphoric acid, an acidic phosphoric acid ester, sulfuric acid, hydrochloric acid, or a sulfonic acid compound to the reaction liquid and thus deactivating the polymerization catalyst through neutralization, thermal decomposition, or chemical decomposition. The termination of the reaction may be followed by filtration if necessary.

The reaction liquid immediately after the termination of the reaction contains the unreacted HDI monomer, and the unreacted HDI monomer is preferably removed with a thin-film evaporator or by extraction. It is preferable to perform such post-treatment to control the HDI monomer concentration in the polyisocyanate composition to 1.0 mass% or less. The upper limit of the HDI monomer concentration in the polyisocyanate composition of the present embodiment is more preferably 0.7 mass% or less, even more preferably 0.5 mass% or less, still even more preferably 0.3 mass% or less, and still even more preferably 0.2 mass% or less. When the HDI monomer concentration is equal to or lower than the upper limit, the toxicity of the polyisocyanate composition of the present embodiment tends to be further reduced so that the safety of polyisocyanate composition may be improved.

[Hydrophilic compound]

The hydrophilic compound of the present embodiment is preferably, but not limited to, at least one selected from the group consisting of an anionic compound, a cationic compound, and a nonionic compound. Preferably, the anionic compound, cationic compound, and nonionic compound each independently contain an active hydrogen group to react with an isocyanate group contained in the polyisocyanate composition. Examples of the active hydrogen group include, but are not limited to, a hydroxy group, an amino group, a mercapto group, and a carboxylic acid group.

<Anionic compound>

The anionic compound is preferably, but not limited to, at least one selected from the group consisting of a carboxylic acid group-containing compound, a phosphoric acid group-containing compound, and a sulfonic acid group-containing compound.

Examples of the carboxylic acid group-containing compound include, but are not limited to, hydroxy group-containing carboxylic acids including:

monohydroxycarboxylic acids such as 1-hydroxyacetic acid, 3-hydroxypropanoic acid, 12-hydroxy-9-octadecanoic acid, hydroxypivalic acid, and lactic acid; and

polyhydroxycarboxylic acids such as dimethylolacetic acid, 2,2-dimethylolbutyric acid, 2,2-dimethylolpentanoic acid, dihydroxysuccinic acid, and dimethylolpropionic acid. Among these, hydroxypivalic acid and dimethylolpropionic acid are preferred.

Examples of the phosphoric acid group-containing compound include, but are not limited to, acidic phosphoric acid esters, acidic phosphorous acid esters, acidic hypophosphorous acid esters, and particular polyether phosphonates (such as those commercially available from Solvay Nicca, Ltd. under the trade name "RHODAFAC" (R)). Among these, acidic phosphoric acid esters are preferred.

In terms of the water dispersibility, the phosphorus atom content of the polyisocyanate composition is preferably 0.03 mass% or more, more preferably 0.05 mass% or more, and even more preferably 0.1 mass% or more, based on the total amount (100 mass%) of the polyisocyanate composition. When the phosphorus atom content is 0.03 mass% or more, the surface tension is reduced, so that higher water dispersibility tends to be exhibited.

In terms of the coating physical properties, the phosphorus atom content of the polyisocyanate composition is preferably 6.0 mass% or less, more preferably 3.0 mass% or less, and even more preferably 1.0 mass% or less, based on the total amount (100 mass%) of the polyisocyanate composition. When the phosphorus atom content is 6.0 mass% or less, the amount of isocyanate groups to be involved in crosslinking is increased, so that the coating physical properties tend to be further improved.

Examples of methods for controlling the content within the above range include, but are not limited to, adjustment of the mixing ratio between the phosphoric acid group-containing compound and the starting polyisocyanate composition. The content is measured by the method described in Examples.

Examples of the sulfonic acid group-containing compound include, but are not limited to, hydroxy group-containing sulfonic acids such as 2-hydroxyethanesulfonic acid, 3-hydroxypropanesulfonic acid, 4-hydroxybutanesulfonic

acid, 5-hydroxypentanesulfonic acid, 6-hydroxyhexanesulfonic acid, hydroxybenzenesulfonic acid, hydroxy(methyl)benzenesulfonic acid, 4-(2-hydroxyethyl)-1-piperazineethanesulfonic acid, 4-(2-hydroxyethyl)-1-piperazinepropanesulfonic acid, 2-hydroxy-3-morpholinopropanesulfonic acid, and particular polyether sulfonates such as those commercially available from The Goldschmidt AG, Essen, Germany, under the trade name "Tegomer"(R). Other examples include amino group-containing sulfonic acids such as 2-aminoethanesulfonic acid, 2-methylaminoethanesulfonic acid, 2-(cyclohexylamino)-ethanesulfonic acid, 3-(cyclohexylamino)-propanesulfonic acid, 4-aminotoluene-2-sulfonic acid, 5-aminotoluene-2-sulfonic acid, 2-aminonaphthalene-4-sulfonic acid, 4-aminobenzenesulfonic acid, and 3-aminobenzenesulfonic acid.

Among the above compounds, 2-hydroxyethanesulfonic acid, 3-hydroxypropanesulfonic acid, hydroxybenzenesulfonic acid, hydroxy(methyl)benzenesulfonic acid, 2-(cyclohexylamino)-ethanesulfonic acid, and 3-(cyclohexylamino)-propanesulfonic acid are preferred.

The acid group such as a carboxylic acid group, phosphoric acid group, or sulfonic acid group of the anionic compound is preferably neutralized with an inorganic base or organic amine compound. Examples of the inorganic base include: alkali metals such as lithium, sodium, potassium, rubidium, and cesium; alkaline-earth metals such as magnesium, calcium, strontium, and barium; metals such as manganese, iron, cobalt, nickel, copper, zinc, silver, cadmium, lead, and aluminum; and ammonia.

Examples of the organic amine compound include: linear tertiary amines such as trimethylamine, triethylamine, tripropylamine, tributylamine, trioctylamine, trilaurylamine, tridecylamine, and tristearylamine; branched tertiary amines such as triisopropylamine, triisobutylamine, tri-2-ethylhexylamine, and tri-branched tridecylamine; and tertiary amines having a mixed hydrocarbon group such as N,N-dimethylethylamine, N,N-dimethylpropylamine, N,N-dimethylisopropylamine, N,N-dimethylbutylamine, N,N-dimethylisobutylamine, N,N-dimethyloctylamine, N,N-dimethyl-2-ethylhexylamine, N,N-dimethyllaurylamine, N,N-dimethyl(branched)tridecylamine, N,N-dimethylstearylamine, N,N-diethylbutylamine, N,N-diethylhexylamine, N,N-diethyloctylamine, N,N-diethyl-2-ethylhexylamine, N,N-diethyllaurylamine, N,N-diisopropylmethylamine, N,N-diisopropylethylamine, N,N-diisopropylbutylamine, and N,N-diisopropyl-2-ethylhexylamine. Other examples include: alicyclic tertiary amines such as N,N-dimethylcyclohexylamine, N,N-diethylbenzylamine, N,N-diethylcyclohexylamine, N,N-dicyclohexylmethylamine, N,N-dicyclohexylethylamine, and tricyclohexylamine; tertiary amines having an aromatic ring substituent such as N,N-dimethylbenzylamine, N,N-diethylbenzylamine, N,N-dibenzylmethylamine, tribenzylamine, N,N-dimethyl-4-methylbenzylamine, N,N-dimethylphenylamine, N,N-diethylphenylamine, and N,N-diphenylmethylamine; cyclic amines such as N-methylpyrrolidine, N-ethylpyrrolidine, N-propylpyrrolidine, N-butylpyrrolidine, N-methylpiperidine, N-ethylpiperidine, N-propylpiperidine, N-butylpiperidine, N-methylmorpholine, N-ethylmorpholine, N-propylmorpholine, N-butylmorpholine, N-sec-butylmorpholine, N-tert-butylmorpholine, N-isobutylmorpholine, and quinuclidine; and mixtures of any of these amines.

A preferred compound among the above examples is at least one selected from tertiary amines having a total of 5 to 30 carbon atoms, and specific examples include triethylamine, tripropylamine, tributylamine, trioctylamine, trilaurylamine, tridecylamine, triisopropylamine, triisobutylamine, tri-2-ethylhexylamine, tri-branched tridecylamine, N,N-dimethylpropylamine, N,N-dimethylisopropylamine, N,N-dimethylbutylamine, N,N-dimethylisobutylamine, N,N-dimethyloctylamine, N,N-dimethyl-2-ethylhexylamine, N,N-dimethyllaurylamine, N,N-dimethyl(branched)tridecylamine, N,N-dimethylstearylamine, N,N-diethylbutylamine, N,N-diethylhexylamine, N,N-diethyloctylamine, N,N-diethyl-2-ethylhexylamine, N,N-diethyllaurylamine, N,N-diisopropylmethylamine, N,N-diisopropylethylamine, N,N-dimethylcyclohexylamine, N,N-diethylcyclohexylamine, N,N-dicyclohexylmethylamine, N,N-dicyclohexylethylamine, N,N-dimethylbenzylamine, N,N-diethylbenzylamine, N,N-dibenzylmethylamine, tribenzylamine, N,N-dimethylphenylamine, N,N-diethylphenylamine, N,N-diphenylmethylamine, N-methylpiperidine, N-ethylpiperidine, N-methylmorpholine, N-ethylmorpholine, quinuclidine, pyridine, quinoline, and mixtures of any of these amines.

In order for the polyisocyanate to be dispersed in water, the polyisocyanate is modified with the hydrophilic compound. When the degree of modification is controlled to be moderate, deterioration in the coating physical properties (hardness, solvent resistance, and water resistance) tends to be prevented. That is, the anionic compound has a high emulsifying capacity and can therefore provide a high emulsifying effect even when used in a small amount.

In terms of the water dispersibility, the sulfur atom content of the polyisocyanate composition is preferably 0.03 mass% or more, more preferably 0.05 mass% or more, and even more preferably 0.08 mass% or more, based on the total amount (100 mass%) of the polyisocyanate composition. When the sulfur atom content is 0.03 mass% or more, the surface tension is reduced, so that higher water dispersibility tends to be exhibited.

In terms of the coating physical properties, the sulfur atom content of the polyisocyanate composition is preferably 3.0 mass% or less, more preferably 2.5 mass% or less, and even more preferably 2.0 mass% or less, based on the total amount (100 mass%) of the polyisocyanate composition. When the content is 3.0 mass% or less, the amount of isocyanate groups to be involved in crosslinking is increased, so that the coating physical properties tend to be further improved.

Examples of methods for controlling the content within the above range include, but are not limited to, adjustment of the mixing ratio between the sulfonic acid group-containing compound and the starting polyisocyanate composition. The content is measured by the method described in Examples.

Examples of methods for reacting the starting polyisocyanate composition and the anionic compound include, but are not limited to, reacting the terminal isocyanate group of the polyisocyanate of the starting polyisocyanate composition and the active hydrogen group of the anionic compound.

<Cationic compound>

Examples of the cationic compound include, but are not limited to, hydroxy group-containing amine compounds such as dimethylethanolamine, diethylethanolamine, diethanolamine, methyldiethanolamine, N,N-dimethylaminohexanol, N,N-dimethylaminoethoxyethanol, N,N-dimethylaminoethoxyethoxyethanol, N,N,N'-trimethylaminoethylethanolamine, and N-methyl-N-(dimethylaminopropyl)aminoethanol. The tertiary amino group (cationic hydrophilic group) modified with the polyisocyanate can be quaternized with dimethyl sulfate or diethyl sulfate. Among the above compounds, dimethylethanolamine, diethylethanolamine, N,N-dimethylaminohexanol, N,N-dimethylaminoethoxyethanol, and N,N-dimethylaminoethoxyethoxyethanol are preferred.
The tertiary amino group of the cationic compound is preferably neutralized with a compound having an anion group. Examples of the anion group include, but are not limited to, a carboxyl group, a sulfonic acid group, a phosphoric acid group, a halogen group, and a sulfuric acid group. Examples of the compound having a carboxyl group include, but are not limited to, formic acid, acetic acid, propionic acid, butyric acid, and lactic acid. Examples of the compound having a sulfone group include, but are not limited to, ethanesulfonic acid. Examples of the compound having a phosphoric acid group include, but are not limited to, phosphoric acid and acidic phosphoric acid esters. Examples of the compound having a halogen group include, but are not limited to, hydrochloric acid. Examples of the compound having a sulfuric acid group include, but are not limited to, sulfuric acid. Among the above compounds, compounds having one carboxyl group are preferred, and more preferred are acetic acid, propionic acid, and butyric acid.

<Nonionic compound>

Examples of the nonionic compound include, but are not limited to, a polyalkylene glycol alkyl ether. The polyalkylene glycol alkyl ether has a structure represented by the following general formula (1).

$$HO\left(R_1O\right)_n R_2 \qquad (1)$$

The polyalkylene glycol alkyl ether does not consist of a single component but is an ensemble of components which differ in the number n representing the degree of polymerization (the number n may be referred to as "degree of polymerization n" or "n"). The degree of polymerization n is therefore expressed by an average value.
$R_1$ in the formula (1) represents an alkylene group. In terms of impartation of hydrophilicity, $R_1$ preferably represents an alkylene group having 1 to 4 carbon atoms. In terms of impartation of higher hydrophilicity, $R_1$ more preferably represents an alkylene group having two carbon atoms (ethylene group). $R_2$ represents an alkyl group. In terms of impartation of hydrophilicity, $R_2$ preferably represents an alkyl group having 1 to 4 carbon atoms. In terms of impartation of higher hydrophilicity, $R_2$ more preferably represents an alkyl group having one carbon atom (methyl group).
When a polyisocyanate is mixed with an aqueous primary component, the problem of viscosity increase caused by mixing with the primary component often arises. If the amount of viscosity increase is large, the polyisocyanate tends to fail to be uniformly dispersed in the primary component, and thus the coating physical properties tend to deteriorate.
The average of n is preferably 5.0 or more and 20 or less, more preferably 5.5 or more and 16 or less, and even more preferably 6.0 or more and 12 or less, in terms of the water dispersibility and the dispersibility in a primary component.
When the average of n is 5.0 or more, the emulsifying capacity is increased, so that the dispersibility tends to be improved. When the average of n is 20 or less, the increase in viscosity is prevented, so that dispersing tends to be easy. The polyalkylene glycol alkyl ether used may consist of one kind of components differing in the average of n or may comprise two or more types of components differing in the average of n. The average of n of the polyalkylene glycol alkyl ether used as a starting material is measured by the method described in Examples below.
Examples of the polyalkylene glycol alkyl ether include, but are not limited to, polyethylene glycol (mono)methyl ether, polyethylene-polypropylene glycol (mono)methyl ether, and polyethylene glycol (mono)ethyl ether. Polyethylene glycol (mono)methyl ether is preferred in terms of impartation of hydrophilicity.
The number of hydroxy groups of the polyalkylene glycol alkyl ether is preferably one in terms of reducing the viscosity of the polyisocyanate composition.
In terms of the coating physical properties, the polyisocyanate composition preferably contains a moiety derived

from the polyalkylene glycol alkyl ether in an amount of 2.0 mass% or more and 30 mass% or less, more preferably in an amount of 4.0 mass% or more and 20 mass% or less, even more preferably in an amount of 6.0 mass% or more and 18 mass% or less, still even more preferably in an amount of 6.0 mass% or more and 16 mass% or less, based on the total amount (100 mass%) of the polyisocyanate composition. When the content of the moiety derived from the polyalkylene glycol alkyl ether is 2.0 mass% or more and 30 mass% or less, the amount of isocyanate groups to be involved in crosslinking is increased, so that the coating physical properties (appearance, hardness, surface drying property, and water resistance) and the moisture stability tend to be further improved.

Examples of methods for controlling the content within the range from 2.0 mass% or more to 30 mass% or less include, but are not limited to, adjustment of the mixing ratio between the polyalkylene glycol alkyl ether and the polyisocyanate. The content is measured by the method described in Examples.

The proportion of the polyalkylene glycol alkyl ether modified (the modification degree) in the polyisocyanate composition refers to the proportion of the polyalkylene glycol alkyl ether modified based on 100 equivalents of the isocyanate groups of the polyisocyanate which is a starting material.

In terms of controlling the content of the polyalkylene glycol alkyl ether-derived moiety within the preferred range described above, the modification degree is preferably 0.5% or more and 40% or less, more preferably 1.0% or more and 30% or less, and even more preferably 2.0% or more and 20% or less. The modification degree is measured by the method described in Examples.

An example of methods for reacting a polyisocyanate and the polyalkylene glycol alkyl ether is, but not limited to, a method in which terminal isocyanate groups of the polyisocyanate are reacted with hydroxy groups of the polyalkylene glycol alkyl ether.

[Method for producing polyisocyanate composition]

The method for producing a polyisocyanate composition according to the present embodiment includes the step (reaction step) of mixing and reacting the starting polyisocyanate composition and the hydrophilic compound.

In terms of the water dispersibility and coating physical properties, the mixing ratio between the starting polyisocyanate composition and the anionic compound in the reaction step is preferably such that the molar amount of the active hydrogen groups in the anionic compound is 0.5 mol% or more and 50 mol% or less and more preferably 1.0 mol% or more and 40 mol% or less based on the molar amount (100 mol%) of the isocyanate groups in the starting polyisocyanate composition.

In terms of the water dispersibility and coating physical properties, the mixing ratio between the starting polyisocyanate composition and the nonionic compound in the reaction step is preferably such that the amount of the nonionic compound is 2.0 mass% or more and 30 mass% or less and more preferably 4.0 mass% or more and 20 mass% or less based on 100 mass% of the polyisocyanate composition.

The reaction temperature and reaction time in the reaction step can be varied depending on the progress of the reaction. The reaction temperature is preferably 0°C or higher and 150°C or lower, and the reaction time is preferably 0.5 hours or more and 48 hours or less.

In the reaction step, a known catalyst may be used if desired. Specific examples of the catalyst include organic tin compounds such as tin octanoate, tin 2-ethyl-1-hexanoate, tin ethylcaproate, tin laurate, tin palmitate, dibutyltin oxide, dibutyltin dichloride, dibutyltin diacetate, dibutyltin dimaleate, dibutyltin dilaurate, dioctyltin diacetate, and dioctyltin dilaurate; organic zinc compounds such as zinc chloride, zinc octanoate, zinc 2-ethyl-1-hexanoate, zinc 2-ethylcaproate, zinc stearate, zinc naphthenate, and zinc acetylacetonate; organic titanium compounds; organic zirconium compounds; tertiary amines such as triethylamine, tributylamine, N,N-diisopropylethylamine, and N,N-dimethylethanolamine; and diamines such as triethylenediamine, tetramethylethylenediamine, and 1,4-diazabicyclo[2.2.2]octane. These may be used alone or as a mixture of two or more thereof.

In the method for producing a polyisocyanate composition according to the present embodiment, a solvent may or may not be used. The solvent used in the method for producing a polyisocyanate composition according to the present embodiment may be a hydrophilic solvent or a hydrophobic solvent.

Examples of the hydrophobic solvent include mineral spirit; solvent naphtha; low aromatic white spirit (LAWS); high aromatic white spirit (HAWS); toluene; xylene; cyclohexane; esters such as ethyl acetate and butyl acetate; and ketones such as acetone, methyl ethyl ketone, methyl isobutyl ketone, and cyclohexanone.

Examples of the hydrophilic solvent include alcohols such as methanol, ethanol, propanol, isopropanol, and 2-ethylhexanol; ethers such as diethylene glycol dimethyl ether, diethylene glycol diethyl ether, diethylene glycol dibutyl ether, and dipropylene glycol dimethyl ether; and esters of ether alcohols such as ethylene glycol monomethyl ether acetate, ethylene glycol monoethyl ether acetate, ethylene glycol monobutyl ether acetate, diethylene glycol monoethyl ether acetate, diethylene glycol monobutyl ether acetate, propylene glycol monoethyl ether acetate, propylene glycol monomethyl ether acetate, and dipropylene glycol monomethyl ether acetate. These may be used alone or as a mixture.

In the method for producing a polyisocyanate composition according to the present embodiment, at least one

selected from the group consisting of an antioxidant, a light stabilizer, a polymerization inhibitor, and a surfactant may be further added in addition to the hydrophilic compound and the polyisocyanate.

[Coating composition and aqueous coating composition]

A coating composition according to the present embodiment comprises the polyisocyanate composition described above. The coating composition may be, but is not limited to, a coating composition based on an organic solvent or an aqueous coating composition in which a resin as a coating formation component is dissolved or dispersed in a water-based medium. In terms of reducing the amount of the organic solvent to be used, the coating composition is preferably an aqueous coating composition. The aqueous coating composition according to the present embodiment comprises a coating composition and water. The coating composition is usable, for example, in paints for buildings, paints for automobiles, paints for automobile repair, paints for plastics, viscous adhesives, adhesives, building materials, household aqueous paints, other coating agents, sealing agents, inks, casting materials, elastomers, foams, plastic materials, and fiber treating agents.

Examples of the resin used as a primary component in the aqueous coating composition include, but are not particularly limited to, acrylic resins, polyester resins, polyether resins, epoxy resins, fluorine resins, polyurethane resins, polyvinylidene chloride copolymers, polyvinyl chloride copolymers, vinyl acetate copolymers, acrylonitrile-butadiene copolymers, polybutadiene copolymers, and styrene-butadiene copolymers.

Examples of the acrylic resins include, but are not particularly limited to, acrylic resins obtained by polymerization of one or a mixture of monomers selected from: (meth)acrylic acid esters such as methyl (meth)acrylate, ethyl (meth)acrylate, isopropyl (meth)acrylate, n-butyl (meth)acrylate, 2-ethylhexyl (meth)acrylate, and lauryl (meth)acrylate; (meth)acrylic acid esters having active hydrogen such as 2-hydroxyethyl (meth)acrylate, 2-hydroxypropyl (meth)acrylate, 2-hydroxybutyl (meth)acrylate, 3-hydroxypropyl (meth)acrylate, and 4-hydroxybutyl (meth)acrylate; unsaturated carboxylic acids such as acrylic acid, methacrylic acid, maleic acid, and itaconic acid; unsaturated amides such as acrylamide, N-methylol acrylamide, and diacetone acrylamide; and other polymerizable monomers such as glycidyl methacrylate, styrene, vinyltoluene, vinyl acetate, acrylonitrile, dibutyl fumarate, p-styrenesulfonic acid, and allylsulfosuccinic acid. The method for polymerization is typically emulsion polymerization. The acrylic resins can be produced also by suspension polymerization, dispersion polymerization, and solution polymerization. In emulsion polymerization, the polymerization may be carried out in a stepwise fashion.

Examples of the polyester resins include, but are not particularly limited to, polyester resins obtained by a condensation reaction of one or a mixture of carboxylic acids selected from the group consisting of succinic acid, adipic acid, sebacic acid, dimer acid, maleic anhydride, phthalic anhydride, isophthalic acid, terephthalic acid, trimellitic acid, and pyromellitic acid with one or a mixture of polyhydric alcohols selected from the group consisting of: diols such as ethylene glycol, diethylene glycol, triethylene glycol, propylene glycol, dipropylene glycol, tripropylene glycol, 1,2-propanediol, 1,3-propanediol, 1,2-butanediol, 1,3-butanediol, 1,4-butanediol, 2,3-butanediol, 2-methyl-1,2-propanediol, 1,5-pentanediol, 2-methyl-2,3-butanediol, 1,6-hexanediol, 1,2-hexanediol, 2,5-hexanediol, 2-methyl-2,4-pentanediol, 2,3-dimethyl-2,3-butanediol, 2-ethyl-hexanediol, 1,2-octanediol, 1,2-decanediol, 2,2,4-trimethylpentanediol, 2-butyl-2-ethyl-1,3-propanediol, and 2,2-diethyl-1,3-propanediol; triols such as glycerin and trimethylolpropane; and tetraols such as diglycerin, dimethylolpropane, and pentaerythritol. Other examples include polycaprolactones as obtained by ring-opening polymerization of ε-caprolactone with hydroxy groups of a low-molecular weight polyol.

Examples of the polyether resins include, but are not particularly limited to: polyether polyols obtained by addition reacting one or a mixture of alkylene oxides such as ethylene oxide, propylene oxide, butylene oxide, cyclohexene oxide, and styrene oxide with one or a mixture of polyhydroxy compounds by means of a hydroxide of lithium, sodium potassium or the like, or a strongly basic catalyst such as an alcoholate or alkylamine; polyether polyols obtained by a reaction of a polyfunctional compound such as an ethylenediamine with an alkylene oxide; polyether polyols obtained by ring-opening polymerization of a cyclic ether such as tetrahydrofuran; and so-called polymer polyols obtained by polymerization of acrylamide etc. by mediation of the polyethers mentioned above.

Among the above-mentioned resins, acrylic resins and polyester resins are preferred. A resin material such as a melamine curing agent, urethane dispersion, or urethane acrylic emulsion can be additionally used if desired.

The above resins are preferably emulsifiable, dispersible, or soluble in water. To this end, carboxyl groups, sulfone groups, etc. contained in the resins can be neutralized.

An exemplary neutralizer usable for neutralization of carboxyl groups, sulfone groups, etc. is, specifically, at least one selected from ammonia and water-soluble amino compounds such as monoethanolamine, ethylamine, dimethylamine, diethylamine, triethylamine, propylamine, dipropylamine, isopropylamine, diisopropylamine, triethanolamine, butylamine, dibutylamine, 2-ethylhexylamine, ethylenediamine, propylenediamine, methylethanolamine, dimethylethanolamine, diethylethanolamine, and morpholine. Preferred as the neutralizer are triethylamine and dimethylethanolamine which are tertiary amines.

Furthermore, there may be incorporated an additive which is commonly added to a paint, such as an inorganic

pigment, organic pigment, extender pigment, silane coupling agent, titanium coupling agent, organic phosphoric acid salt, organic phosphorous acid salt, thickener, leveling agent, thixotropy imparting agent, anti-foaming agent, anti-freezing agent, delusterant, crosslinking catalyst, anti-sticking agent, dispersant, wetting agent, filler, plasticizer, lubricant, reductant, preservative, anti-fungal agent, deodorant, anti-yellowing agent, ultraviolet absorber, anti-static agent, electrostatic modifier, or anti-setting agent. To improve dispersibility in the paint, a surfactant may be further added. To improve the storage stability of the paint, an antioxidant, light stabilizer, and polymerization inhibitor may be further added.

Examples of catalysts for curing acceleration include, but are not limited to: metal salts such as dibutyltin dilaurate, tin 2-ethylhexanoate, zinc 2-ethylhexanoate, and cobalt salts; and tertiary amines such as triethylamine, pyridine, methylpyridine, benzyldimethylamine, N,N-dimethylcyclohexylamine, N-methylpiperidine, pentamethyldiethylenetriamine, N,N'-endoethylenepiperazine, and N,N'-dimethylpiperazine.

[Coated substrate]

A coated substrate according to the present embodiment comprises a substrate and the above-described coating composition coating the substrate.

The substrate desired for use in the coated substrate of the present embodiment is not particularly limited and may be any substrate that can be coated with the coating composition. Examples of the substrate include metals, wood, glass, stones, ceramics, concretes, rigid or flexible plastics, fiber products, leather products, and paper. In some cases, a common primer may be provided on the substrate before coating.

Examples

Hereinafter, the present embodiment will be described in more detail with reference to specific examples and comparative examples. The physical properties of polyisocyanate compositions according to the examples and comparative examples were measured as described below. Unless otherwise specified, "part(s)" and "%" respectively refer to "part(s) by mass" and "mass%".

(Physical property 1) Viscosity

Each polyisocyanate composition was used as a specimen, and the viscosity was measured using an E-type viscometer (manufactured by TOKIMEC INC.) at 25°C. In the measurement, a standard rotor (1°34' × R24) was used. The rotation speed was as follows.

100 rpm (for a viscosity of less than 128 mPa·s)
50 rpm (for a viscosity of 128 mPa·s or more and less than 256 mPa·s)
20 rpm (for a viscosity of 256 mPa·s or more and less than 640 mPa·s)
10 rpm (for a viscosity of 640 mPa·s or more and less than 1280 mPa·s)
5.0 rpm (for a viscosity of 1280 mPa·s or more and less than 2560 mPa·s)

The non-volatile content of each of the polyisocyanate compositions produced in Examples and Comparative Examples described below was examined by the following method, and polyisocyanate compositions for which the non-volatile content was determined to be 98 mass% or more were directly subjected to the measurement.

(Physical property 2) Non-volatile content

Each polyisocyanate composition was used as a specimen. When dilution with a solvent was done, an aluminum cup was accurately weighed, about 1 g of the specimen was placed in the cup, and then the cup was accurately weighed before drying by heating. The cup containing the specimen was heated in a dryer at 105°C for 3 hours. The heated cup was cooled to room temperature, and then the cup was accurately weighed again. The mass% of the dry residue of the specimen was determined as the non-volatile content. The calculation equation for the non-volatile content is given below. When dilution with a solvent was not done, the non-volatile content was assumed to be substantially 100%.

Non-volatile content (mass%) = (Mass of cup after drying by heating − mass of aluminum cup)/(mass of cup before drying by heating − mass of aluminum cup) × 100%

(Physical property 3) Isocyanate group content

Each polyisocyanate composition was used as a specimen, and the isocyanate group content was measured according to the method specified in JIS K 7301-1995 (Testing methods for tolylene diisocyanate type preporlymers for thermosetting urethane elastomers). The method for measuring the isocyanate group content will be more specifically described below.
(1) The specimen weighing 1 g was placed in a 200 mL conical flask, and 20 mL of toluene was added into the flask to dissolve the specimen.
(2) After that, 20 mL of a 2.0 N di-n-butylamine-toluene solution was added into the flask, which was left in place for 15 minutes.
(3) 70 mL of 2-propanol was added into the flask and dissolved to obtain a solution.
(4) The solution obtained in (3) was titrated with 1 mol/L hydrochloric acid to determine the titer of the specimen solution.
(5) The measurement was carried out by the same procedures as in (1) to (3) for the case where no specimen was added, and the titer of the blank solution was determined.

The isocyanate group content was calculated by the following calculation equation from the titer of the specimen solution and the titer of the blank solution determined as above.

Isocyanate group content (mass%) = (Titer of blank solution − titer of specimen solution) × 42/[mass of specimen (g) × 1,000] × 100%

(Physical property 4) HDI monomer mass concentration

First, a 20-mL sample vial was placed on a digital balance, with which the specimen was accurately weighed to about 1 g. Next, 0.03 to 0.04 g of nitrobenzene (internal standard solution) was added, and the mixture was accurately weighed. About 9 mL of ethyl acetate was further added, the vial was tightly capped, and the contents of the vial were thoroughly mixed to prepare a sample.
The liquid prepared above was subjected to quantification by gas chromatography under the conditions listed below.
Apparatus: GC-8A, SHIMADZU CORPORATION
Column: Silicone OV-17, Shinwa Chemical Industries Ltd.
Column oven temperature: 120°C
Injection/detector temperature: 160°C

(Physical property 5) Average of n of polyalkylene glycol alkyl ether as starting material

Each polyalkylene glycol alkyl ether prepared as a starting material was used as a specimen, and the average of n was calculated from a hydroxyl value described below.
The hydroxyl value measurement was carried out according to the methods specified in JIS K 0070-1992 (Test methods for acid value, saponification value, ester value, iodine value, hydroxyl value and unsaponifiable matter of chemical products) and JIS K 1557-1 (Plastics-Polyols for use in the production of polyurethane-Part 1: Determination of hydroxyl number).
The molecular weight of the polyalkylene glycol alkyl ether was determined from the hydroxyl value determined as above, and the average of n was calculated from the molecular weight using the following calculation equation.

$$\text{Average of n} = (\text{Molecular weight of polyalkylene glycol alkyl ether} - \text{molecular weight of alkyl group} - \text{molecular weight of hydroxy group})/(\text{molecular weight of alkylene oxide})$$

$$\text{Molecular weight of polyalkylene glycol alkyl ether} = 56.1 \times 1000/[\text{hydroxyl value (mgKOH/g)}]$$

For example, when the polyalkylene glycol alkyl ether used was polyethylene glycol (mono)methyl ether, the average of n was determined as follows.

$$\text{Average of n} = (\text{Molecular weight of polyethylene glycol (mono)methyl ether} - \text{molecular weight of methyl group (15)} - \text{molecular weight of hydroxy group (17)})/(\text{molecular weight of ethylene oxide (44)})$$

(Physical property 6) Average of n of polyalkylene glycol alkyl ether in polyisocyanate composition

Each polyisocyanate composition was used as a specimen, and the average of n was determined by proton nuclear magnetic resonance (NMR) using the apparatus and conditions listed below. The integrated value of the relative intensity attributed to the alkylene group and the integrated value of the relative intensity attributed to the alkyl group were correlated to determine the average of n of the polyalkylene glycol alkyl ether in the polyisocyanate composition.
NMR apparatus: Bruker Biospin Avance 600 (trade name)
Observed nucleus: 1H
Frequency: 600 MHz
Solvent: $CDCl_3$
Cumulative number: 256 times

(Physical property 7) Amount of modification of polyalkylene glycol alkyl ether (Modification degree)

Each polyisocyanate composition was used as a specimen, and the modification degree, which is the amount of modification of the polyalkylene glycol alkyl ether based on 100 equivalents of the isocyanate groups of the polyisocyanate used as a starting material, was determined from the peak area ratios of an unmodified isocyanurate trimer, a mono-modified isocyanurate trimer, a double-modified isocyanurate trimer, and a triple-modified isocyanurate trimer at 220 nm in liquid chromatography (LC). The apparatus and conditions used were as follows.
LC apparatus: UPLC (trade name), manufactured by Waters Corporation
Column: ACQUITY UPLC HSS T3 1.8 μm C18, manufactured by Waters Corporation and having an inner diameter of 2.1 mm and a length of 50 mm
Flow rate: 0.3 mL/min
Mobile phase: A = 10 mM aqueous ammonium acetate solution, B = acetonitrile
Gradient conditions: The initial composition of the mobile phase was set to A/B = 98/2, the proportion of B was linearly increased after injection of the specimen, and A/B = 0/100 was reached after 10 minutes.
Detection means: Photodiode array detector, measurement wavelength = 220 nm

(Physical property 8) Content of polyalkylene glycol alkyl ether-derived moiety

Each polyisocyanate composition was used as a specimen, and the content of the polyalkylene glycol alkyl ether-derived moiety of the modified polyisocyanate in the polyisocyanate composition was calculated as follows from

the isocyanate group content measured in (Physical property 3), the molecular weight of the polyalkylene glycol alkyl ether calculated from the average of n of the polyalkylene glycol alkyl ether determined in (Physical property 6), and the modification degree determined in (Physical property 7).

$$\text{Content (\%)} = \text{Isocyanate group content (mass\%)}/100\%/42/(100 - \text{modification degree (\%)}) \times \text{modification degree (\%)} \times \text{molecular weight of polyalkylene glycol alkyl ether} \times 100\%$$

For example, when the polyalkylene glycol alkyl ether used was polyethylene glycol (mono)methyl ether, its molecular weight was determined as follows.

$$\text{Molecular weight of polyethylene glycol (mono)methyl ether} = \text{molecular weight of methyl group (15)} + \text{molecular weight of hydroxy group (17)} + (\text{molecular weight of ethylene oxide (44)} \times \text{average of n})$$

(Physical property 9) Phosphorus atom content based on total amount (100 mass%) of polyisocyanate composition

Each polyisocyanate composition was used as a specimen. The phosphorus atom content attributed to phosphoric acid groups in the polyisocyanate composition was determined by inductively coupled plasma emission spectrometry (ICP-AES) using the apparatus and conditions listed below.
ICP-AES apparatus: iCAP 6300 Duo (trade name), manufactured by Thermo Fisher Scientific Inc.
High-frequency output: 1150 W
Coolant gas: 12 L/min
Plasma gas: 0.5 L/min
Carrier gas: 0.5 L/min
Purge gas: 0.6 MPa
Torch: Radial/Axial
Detector: CID
Measurement wavelength: 180.731 nm
Pretreatment method: The specimen was decomposed by sulfuric acid and hydrogen peroxide to prepare a sample fluid.

(Physical property 10) Sulfur atom content based on total amount (100 mass%) of polyisocyanate composition

Each polyisocyanate composition was used as a specimen. The sulfur atom content attributed to sulfonic acid groups in the polyisocyanate composition was determined by ion chromatography (IC) using the apparatus and conditions listed below.
IC apparatus: ICS-1500 (trade name), manufactured by Thermo Fisher Scientific Inc.
Column: AS12A
Mobile phase: 2.7 mmol/L $Na_2CO_3$, 0.3 mmol/L $NaHCO_3$
Flow rate: 1.5 mL/min
Amount of injected specimen: 1 mL
Suppressor: AERS-500
Detector: Electrical conductivity detector
Pretreatment method: The specimen was burned in an oven, and the resulting combustion gas was absorbed into an absorbing liquid.
(Physical property 11) Molar ratios uretdione groups/isocyanurate groups, uretonimino groups/isocyanurate groups, iminooxadiazinedione groups/isocyanurate groups, and allophanate groups/isocyanurate groups
The molar ratios uretdione groups/isocyanurate groups, uretonimino groups/isocyanurate groups, iminooxadiazinedione groups/isocyanurate groups, and allophanate groups/isocyanurate groups were each determined by 13C-NMR spectroscopy using Avance 600(trade name) manufactured by Bruker Biospin Corporation.

The specific measurement conditions were as follows.

13C-NMR apparatus: AVANCE 600 (manufactured by Bruker Biospin Corporation)
Cryoprobe: CP DUL 600S3 C/H-D-05 Z (manufactured by Bruker Biospin Corporation)
Resonance frequency: 150 MHz
Concentration: 60 wt/vol%
Shift standard: $CDCl_3$ (77 ppm)
Cumulative number: 10000 times
Pulse program: zgpg30 (complete proton decoupling, waiting time = 2 sec)

In the above measurement, integrals of the following signals were divided by the number of carbon atoms involved in the measurement, and the molar ratios were determined from the resulting values.

Isocyanurate groups: Around 148.6 ppm: Integral ÷ 3
Uretdione groups: Around 157.5 ppm: Integral ÷ 2
Allophanate groups: Around 154 ppm: Integral ÷ 1
Uretonimino groups: Around 159.5 ppm: Integral ÷ 1
Iminooxadiazinedione groups: Around 137.3 ppm: Integral ÷ 1

[Production of starting polyisocyanate composition]

(Production Example 1)

A nitrogen atmosphere was created in a four-necked flask equipped with a stirrer, a thermometer, a reflux condenser tube, a nitrogen inlet tube, and a dropping funnel, and 6,000 g of HDI and 7.0 g of isobutanol were placed in the flask. The internal temperature of the reactor was maintained at 80°C for 2 Hr while the contents were stirred. After that, 5.0 g of a solution prepared by diluting trimethyl-2-methyl-2-hydroxyethyl ammonium hydroxide as an isocyanurate formation catalyst with isobutanol to 5 mass% was added to allow isocyanurate formation reaction to take place. At the time when the NCO content of the reaction liquid reached 44.6 mass%, phosphoric acid was added to terminate the reaction. The increase in uretdione dimer concentration as a result of the reaction was 1.0 mass% or less. Subsequently, the temperature of the reaction liquid was increased to 160°C at a rate of 1.6°C/min and maintained at 160°C for 1 Hr. After that, the temperature was decreased to 40°C at a rate of 1.5°C/min. This heating produced uretdione groups and uretonimino groups. Purification was performed twice using a thin-film evaporator at 160°C and 0.2 Torr, yielding polyisocyanate composition P-1 having a non-volatile content of 99.5 mass%, a viscosity of 520 mPa·s (25°C), a NCO content of 23.1 mass%, and a HDI monomer concentration of 0.11 mass%.

(Production Example 2)

A nitrogen atmosphere was created in a four-necked flask equipped with a stirrer, a thermometer, a reflux condenser tube, a nitrogen inlet tube, and a dropping funnel, and 6,000 g of HDI and 11.0 g of isobutanol were placed in the flask. The internal temperature of the reactor was maintained at 80°C for 2 Hr while the contents were stirred. After that, 5.0 g of a solution prepared by diluting trimethyl-2-methyl-2-hydroxyethyl ammonium hydroxide as an isocyanurate formation catalyst with isobutanol to 5 mass% was added to allow isocyanurate formation reaction to take place. At the time when the NCO content of the reaction liquid reached 45.5 mass%, phosphoric acid was added to terminate the reaction. The increase in uretdione dimer concentration as a result of the reaction was 1.0 mass% or less. Subsequently, the temperature of the reaction liquid was increased to 160°C at a rate of 1.6°C/min and maintained at 160°C for 1 Hr. After that, the temperature was decreased to 40°C at a rate of 1.5°C/min. This heating produced uretdione groups and uretonimino groups. Purification was performed twice using a thin-film evaporator at 160°C and 0.2 Torr, yielding polyisocyanate composition P-2 having a non-volatile content of 99.5 mass%, a viscosity of 280 mPa·s (25°C), a NCO content of 23.2 mass%, and a HDI monomer concentration of 0.11 mass%.

(Production Example 3)

The rates of temperature increase and decrease of the reaction liquid after the isocyanurate formation reaction were changed to 2.2°C/min and 2.4°C/min, respectively. The other conditions were the same as those in Example 1. As a result, polyisocyanate composition P-3 having a non-volatile content of 99.6 mass%, a viscosity of 540 mPa·s (25°C), a NCO content of 23.1 mass%, and a HDI monomer concentration of 0.12 mass% was obtained.

(Production Example 4)

The conditions of the heating of the reaction liquid after the isocyanurate formation reaction were changed to 155°C and 1.0 Hr.

The other conditions were the same as those in Example 1. As a result, polyisocyanate composition P-4 having a non-volatile content of 99.7 mass%, a viscosity of 530 mPa·s (25°C), a NCO content of 23.1 mass%, and a HDI monomer concentration of 0.10 mass% was obtained.

(Production Example 5)

The conditions of the heating of the reaction liquid after the isocyanurate formation reaction were changed to 165°C and 5.0 Hr.

The other conditions were the same as those in Example 1. As a result, polyisocyanate composition P-5 having a non-volatile content of 99.5 mass%, a viscosity of 510 mPa·s (25°C), a NCO content of 23.1 mass%, and a HDI monomer concentration of 0.09 mass% was obtained.

(Comparative Production Example 1)

The rates of temperature increase and decrease of the reaction liquid after the isocyanurate formation reaction were changed to 2.6°C/min and 4.5°C/min, respectively. The other conditions were the same as those in Example 1. As a result, polyisocyanate composition C-1 having a non-volatile content of 99.6 mass%, a viscosity of 530 mPa·s (25°C), a NCO content of 23.1 mass%, and a HDI monomer concentration of 0.10 mass% was obtained.

(Comparative Production Example 2)

After the isocyanurate formation reaction, the temperature of the reaction liquid was increased to 165°C at a rate of 0.3°C/min and maintained at 165°C for 8 Hr. After that, the temperature was decreased to 40°C at a rate of 0.3°C/min. The other conditions were the same as those in Example 1. As a result, polyisocyanate composition C-2 having a non-volatile content of 99.6 mass%, a viscosity of 520 mPa·s (25°C), a NCO content of 23.1 mass%, and a HDI monomer concentration of 0.11 mass% was obtained.

(Comparative Production Example 3)

A nitrogen atmosphere was created in a four-necked flask equipped with a stirrer, a thermometer, a reflux condenser tube, a nitrogen inlet tube, and a dropping funnel, and 6,000 g of HDI and 7.0 g of isobutanol were placed in the flask. The internal temperature of the reactor was maintained at 80°C for 2 Hr while the contents were stirred. After that, 5.0 g of a solution prepared by diluting trimethyl-2-methyl-2-hydroxyethyl ammonium hydroxide as an isocyanurate formation catalyst with isobutanol to 5.0 mass% was added to allow isocyanurate formation reaction to take place. At the time when the NCO content of the reaction liquid reached 44.1 mass%, phosphoric acid was added to terminate the reaction. The increase in uretdione dimer concentration as a result of the reaction was 1.0 mass% or less. Further, the reaction liquid was maintained at 100°C for 1 Hr. Purification was performed twice using a thin-film evaporator at 160°C and 0.2 Torr, yielding polyisocyanate composition C-3 having a non-volatile content of 99.5 mass%, a viscosity of 1050 mPa·s (25°C), a NCO content of 23.1 mass%, and a HDI monomer concentration of 0.09 mass%.

(Comparative Production Example 4)

A nitrogen atmosphere was created in a four-necked flask equipped with a stirrer, a thermometer, a reflux condenser tube, a nitrogen inlet tube, and a dropping funnel, and 6,000 g of HDI was placed in the flask. The internal temperature of the reactor was maintained at 30°C for 2 Hr while the contents were stirred. Subsequently, 14.8 g (0.1 mol) of 1-butylphosphorane was added, and the reactor was left for 15 Hr. After that, 3.6 g (0.11 mol) of elemental sulfur was added to terminate the reaction. Purification was performed twice using a thin-film evaporator at 160°C and 0.2 Torr, yielding polyisocyanate composition C-4 having a non-volatile content of 99.5 mass%, a viscosity of 1000 mPa·s (25°C), a NCO content of 23.3 mass%, and a HDI monomer concentration of 0.12 mass%.

(Comparative Production Example 5)

A nitrogen atmosphere was created in a four-necked flask equipped with a stirrer, a thermometer, and a nitrogen inlet tube. 700 g of polyisocyanate composition C-1 obtained in Comparative Production Example 1 and 300 g of polyisocyanate composition C-4 obtained in Comparative Production Example 4 were placed in the flask, the contents of which were stirred at 40°C for 2 Hr to yield polyisocyanate composition C-5 having a non-volatile content of 99.7 mass%, a viscosity of 690 mPa·s (25°C), a NCO content of 23.1 mass%, and a HDI monomer concentration of 0.11 mass%.

(Production Example 6)

A nitrogen atmosphere was created in a four-necked flask equipped with a stirrer, a thermometer, and a nitrogen inlet tube. 820 g of polyisocyanate composition C-1 obtained in Comparative Production Example 1 and 180 g of polyisocyanate composition C-4 obtained in Comparative Production Example 4 were placed in the flask, the contents of which were stirred at 40°C for 2 Hr to yield polyisocyanate composition P-6 having a non-volatile content of 99.5 mass%, a viscosity of 520 mPa·s (25°C), a NCO content of 23.1 mass%, and a HDI monomer concentration of 0.11 mass%.

(Production Example 7 (Production of sulfonic acid amine salt))

10 parts by mass of 1-propanol was added to 20 parts by mass of a 70 mass% aqueous solution of 2-hydroxyethanesulfonic acid, and the mixture was stirred to obtain a solution. Further, triethylamine was weighed to an equivalent ratio of 1 and diluted with the same parts by mass of 1-propanol. The resulting diluent was added dropwise to the above solution under stirring. The stirring was stopped 1 hour after the start of the dropwise addition, and the water and solvent were removed using an evaporator. As a result, 2-hydroxyethanesulfonic acid triethylamine salt having a solids content of 99.0 mass% was obtained.

(Production Example 8 (Production of sulfonic acid amine salt))

10 parts by mass of 1-propanol was added to 20 parts by mass of a 70 mass% aqueous solution of 2-hydroxyethanesulfonic acid, and the mixture was stirred to obtain a solution. Further, N,N-diisopropylethylamine was weighed to an equivalent ratio of 1 and diluted with the same parts by mass of 1-propanol. The resulting diluent was added dropwise to the above solution under stirring. The stirring was stopped 1 hour after the start of the dropwise addition, and the water and solvent were removed using an evaporator. As a result, 2-hydroxyethanesulfonic acid N,N-diisopropylethylamine salt having a solids content of 99.1 mass% was obtained.

(Production Example 9 (Production of sulfonic acid amine salt))

10 parts by mass of 1-propanol was added to 20 parts by mass of a 70 mass% aqueous solution of 2-hydroxyethanesulfonic acid, and the mixture was stirred to obtain a solution. Further, tributylamine was weighed to an equivalent ratio of 1 and diluted with the same parts by mass of 1-propanol. The resulting diluent was added dropwise to the above solution under stirring. The stirring was stopped 1 hour after the start of the dropwise addition, and the water and solvent were removed using an evaporator. As a result, 2-hydroxyethanesulfonic acid tributylamine salt having a solids content of 99.1 mass% was obtained.

(Production Example 10 (Production of sulfonic acid amine salt))

10 parts by mass of 1-propanol was added to 20 parts by mass of a 70 mass% aqueous solution of 2-hydroxyethanesulfonic acid, and the mixture was stirred to obtain a solution. Further, N,N-dimethylcyclohexylamine was weighed to an equivalent ratio of 1 and diluted with the same parts by mass of 1-propanol. The resulting diluent was added dropwise to the above solution under stirring. The stirring was stopped 1 hour after the start of the dropwise addition, and the water and solvent were removed using an evaporator. As a result, 2-hydroxyethanesulfonic acid N,N-dimethylcyclohexylamine salt having a solids content of 99.8 mass% was obtained.

(Example 1)

To 80.0 parts by mass of polyisocyanate P-1 obtained in Production Example 1, 14.3 parts by mass of a polyethylene glycol monomethyl ether having an average number of 4.2 ethylene oxide repeating units (manufactured by NIPPON NYUKAZAI CO., LTD. under the trade name "MPG") and 5.7 parts by mass of a polyethylene glycol monomethyl ether having an average number of 9.0 ethylene oxide repeating units (manufactured by NIPPON NYUKAZAI CO., LTD. under the trade name "MPG-130") were added so that the resulting average number of ethylene oxide repeating units would be adjusted to 5.0. The mixture was stirred under nitrogen at 100°C for 4 hours to allow the reaction to proceed. As a result of the reaction, a polyisocyanate composition was obtained.

The obtained polyisocyanate composition had a non-volatile content of 100 mass%, a viscosity of 600 mPa·s

(25°C), a NCO content of 15.0 mass%, and a HDI monomer concentration of 0.09 mass%. The modification degree in the obtained composition was 17.9%, and the average number of the ethylene oxide repeating units, as determined by NMR, was 5.1. The polyethylene glycol monomethyl ether content was therefore calculated to be 20.0%.

Through $^{13}C$-NMR spectroscopy, the molar ratio uretdione groups/isocyanurate groups was determined to be 0.32, the molar ratio uretonimino groups/isocyanurate groups was determined to be 0.0022, the molar ratio iminooxadiazinedione groups/isocyanurate groups was determined to be 0.0038, and the molar ratio allophanate groups/isocyanurate groups was determined to be 0.070. After that, the polyisocyanate composition was evaluated for the increase in amount of diisocyanate (DI) as a result of storage and the moisture stability. The polyisocyanate composition was evaluated also for the water dispersibility. The evaluation results are shown in Table 1.

(Example 2)

To 82.0 parts by mass of polyisocyanate P-1 obtained in Production Example 1, 10.4 parts by mass of a polyethylene glycol monomethyl ether having an average number of 4.2 ethylene oxide repeating units (manufactured by NIPPON NYUKAZAI CO., LTD. under the trade name "MPG") and 7.6 parts by mass of a polyethylene glycol monomethyl ether having an average number of 9.0 ethylene oxide repeating units (manufactured by NIPPON NYUKAZAI CO., LTD. under the trade name "MPG-130") were added so that the resulting average number of ethylene oxide repeating units would be adjusted to 5.5. The mixture was stirred under nitrogen at 100°C for 4 hours to allow the reaction to proceed. As a result of the reaction, a polyisocyanate composition was obtained. The subsequent measurements were conducted in the same manner as in Example 1. The evaluation results are shown in Table 1.

(Example 3)

To 85.0 parts by mass of polyisocyanate P-1 obtained in Production Example 1, 6.9 parts by mass of a polyethylene glycol monomethyl ether having an average number of 4.2 ethylene oxide repeating units (manufactured by NIPPON NYUKAZAI CO., LTD. under the trade name "MPG") and 8.1 parts by mass of a polyethylene glycol monomethyl ether having an average number of 9.0 ethylene oxide repeating units (manufactured by NIPPON NYUKAZAI CO., LTD. under the trade name "MPG-130") were added so that the resulting average number of ethylene oxide repeating units would be adjusted to 6.0. The mixture was stirred under nitrogen at 100°C for 4 hours to allow the reaction to proceed. As a result of the reaction, a polyisocyanate composition was obtained. The subsequent measurements were conducted in the same manner as in Example 1. The evaluation results are shown in Table 1.

(Example 4)

10.0 parts by mass of a polyethylene glycol monomethyl ether having an average number of 9.0 ethylene oxide repeating units (manufactured by NIPPON NYUKAZAI CO., LTD. under the trade name "MPG-130") was added to 90.0 parts by mass of polyisocyanate P-1 obtained in Production Example 1, and the mixture was stirred under nitrogen at 100°C for 4 hours to allow the reaction to proceed. As a result of the reaction, a polyisocyanate composition was obtained. The subsequent measurements were conducted in the same manner as in Example 1. The evaluation results are shown in Table 1.

(Example 5)

6.0 parts by mass of a polyethylene glycol monomethyl ether having a molecular weight of 550 (manufactured by NOF CORPORATION under the trade name "M550" and having an average number of 11.8 ethylene oxide repeating units) was added to 94.0 parts by mass of polyisocyanate P-1 obtained in Production Example 1, and the mixture was stirred under nitrogen at 100°C for 4 hours to allow the reaction to proceed. As a result of the reaction, a polyisocyanate composition was obtained. The subsequent measurements were conducted in the same manner as in Example 1. The evaluation results are shown in Table 1.

(Example 6)

4.0 parts by mass of a polyethylene glycol monomethyl ether having an average number of 15.0 ethylene oxide repeating units (manufactured by NIPPON NYUKAZAI CO., LTD. under the trade name "MPG-130") was added to 96.0 parts by mass of polyisocyanate P-1 obtained in Production Example 1, and the mixture was stirred under nitrogen at 100°C for 4 hours to allow the reaction to proceed. As a result of the reaction, a polyisocyanate composition was obtained. The subsequent measurements were conducted in the same manner as in Example 1. The evaluation results are shown in Table 1.

(Example 7)

2.0 parts by mass of a polyethylene glycol monomethyl ether having a molecular weight of 750 (manufactured by The Dow Chemical Company under the trade name "750" and having an average number of 16.3 ethylene oxide repeating units) was added to 98.0 parts by mass of polyisocyanate P-1 obtained in Production Example 1, and the mixture was stirred under nitrogen at 100°C for 4 hours to allow the reaction to proceed. As a result of the reaction, a polyisocyanate composition was obtained. The subsequent measurements were conducted in the same manner as in Example 1. The evaluation results are shown in Table 1.

(Example 8)

20 g of monobutyl phosphate and 13.0 g of triethylamine were mixed to neutralize a part of the monobutyl phosphate. 33.0 parts by mass of the monobutyl phosphate-triethylamine mixture thus obtained was added to 1000 parts by mass of polyisocyanate P-1 obtained in Production Example 1, and the resulting mixture was stirred under nitrogen at 90°C for 4 hours to allow the reaction to proceed. As a result of the reaction, a polyisocyanate composition was obtained. The subsequent measurements were conducted in the same manner as in Example 1. The phosphorus atom concentration as determined by ICP-AES was 0.38 mass%. The evaluation results are shown in Table 1.

(Example 9)

10 g of monobutyl phosphate and 6.5 g of triethylamine were mixed to neutralize a part of the monobutyl phosphate. 100 parts by mass of a polyethylene glycol monomethyl ether having a molecular weight of 400 (manufactured by NOF CORPORATION under the trade name "M400" and having an average number of 8.4 ethylene oxide repeating units) and 16.5 parts by mass of the monobutyl phosphate-triethylamine mixture obtained above were added to 1000 parts by mass of polyisocyanate P-1 obtained in Production Example 1, and the resulting mixture was stirred under nitrogen at 90°C for 4 hours to allow the reaction to proceed. As a result of the reaction, a polyisocyanate composition was obtained. The subsequent measurements were conducted in the same manner as in Example 8. The evaluation results are shown in Table 1.

(Example 10)

6.1 parts by mass of 3-cyclohexylaminopropanesulfonic acid and 3.5 parts by mass of N,N-dimethylcyclohexylamine were added to 1000 parts by mass of polyisocyanate P-1 obtained in Production Example 1, and the mixture was stirred under nitrogen at 100°C for 5 hours to allow the reaction to proceed. As a result of the reaction, a polyisocyanate composition was obtained. The subsequent measurements were conducted in the same manner as in Example 1. The sulfur atom concentration as determined by ion chromatography was 0.09 mass%. The evaluation results are shown in Table 1.

(Example 11)

12.5 parts by mass of 2-hydroxyethanesulfonic acid triethylamine salt obtained in Production Example 7, 200 parts by mass of acetone, and 0.05 parts by mass of dibutyltin dilaurate were added to 1000 parts by mass of polyisocyanate P-1 obtained in Production Example 1, and the mixture was stirred under nitrogen and reflux at 70°C for 5 hours to allow the reaction to proceed. After that, the reflux was stopped, and the reaction was continued under stirring at 100°C for 0.5 hours. As a result of the reaction, a polyisocyanate composition was obtained. The subsequent measurements were conducted in the same manner as in Example 10. The evaluation results are shown in Table 1.

(Example 12)

27.7 parts by mass of 2-hydroxyethanesulfonic acid N,N-diisopropylethylamine salt obtained in Production Example 8, 200 parts by mass of acetone, and 0.05 parts by mass of dibutyltin dilaurate were added to 1000 parts by mass of polyisocyanate P-1 obtained in Production Example 1, and the mixture was stirred under nitrogen and reflux at 70°C for 5 hours to allow the reaction to proceed. After that, the reflux was stopped, and the reaction was continued under stirring at 100°C for 0.5 hours. As a result of the reaction, a polyisocyanate composition was obtained. The subsequent measurements were conducted in the same manner as in Example 10. The evaluation results are shown in Table 1.

(Example 13)

85.5 parts by mass of 2-hydroxyethanesulfonic acid tributylamine salt obtained in Production Example 9 was added to 1000 parts by mass of polyisocyanate P-1 obtained in Production Example 1, and the mixture was stirred under nitrogen at 100°C for 6 hours to allow the reaction to proceed. As a result of the reaction, a polyisocyanate composition was obtained. The subsequent measurements were conducted in the same manner as in Example 10. The evaluation results are shown in Table 2.

(Example 14)

7.0 parts by mass of 2-hydroxyethanesulfonic acid N,N-dimethylcyclohexylamine salt obtained in Production Example 10 and 20.0 parts by mass of a polyethylene glycol monomethyl ether having an average number of 9.0 ethylene oxide repeating units (manufactured by NIPPON NYUKAZAI CO., LTD. under the trade name "MPG-130") were added to 1000 parts by mass of polyisocyanate P-1 obtained in Production Example 1, and the mixture was stirred under nitrogen at 100°C for 4 hours to allow the reaction to proceed. As a result of the reaction, a polyisocyanate composition was obtained. The subsequent measurements were conducted in the same manner as in Example 10. The evaluation results are shown in Table 2.

(Example 15)

A polyisocyanate composition was obtained in the same manner as in Example 4, except for replacing polyisocyanate P-1 obtained in Production Example 1 with polyisocyanate P-2 obtained in Production Example 2. The subsequent measurements were conducted in the same manner as in Example 1. The evaluation results are shown in Table 2.

(Example 16)

A polyisocyanate composition was obtained in the same manner as in Example 4, except for replacing polyisocyanate P-1 obtained in Production Example 1 with polyisocyanate P-3 obtained in Production Example 3. The subsequent measurements were conducted in the same manner as in Example 1. The evaluation results are shown in Table 2.

(Example 17)

A polyisocyanate composition was obtained in the same manner as in Example 4, except for replacing polyisocyanate P-1 obtained in Production Example 1 with polyisocyanate P-4 obtained in Production Example 4. The subsequent measurements were conducted in the same manner as in Example 1. The evaluation results are shown in Table 2.

(Example 18)

A polyisocyanate composition was obtained in the same manner as in Example 4, except for replacing polyisocyanate P-1 obtained in Production Example 1 with polyisocyanate P-5 obtained in Production Example 5. The subsequent measurements were conducted in the same manner as in Example 1. The evaluation results are shown in Table 2.

(Example 19)

A polyisocyanate composition was obtained in the same manner as in Example 4, except for replacing polyisocyanate P-1 obtained in Production Example 1 with polyisocyanate P-6 obtained in Production Example 6. The subsequent measurements were conducted in the same manner as in Example 1. The evaluation results are shown in Table 2.

(Comparative Example 1)

A polyisocyanate composition was obtained in the same manner as in Example 4, except for replacing polyisocyanate P-1 obtained in Production Example 1 with polyisocyanate C-1 obtained in Comparative Production Example 1. The subsequent measurements were conducted in the same manner as in Example 1. The evaluation results are shown in Table 2.

(Comparative Example 2)

A polyisocyanate composition was obtained in the same manner as in Example 4, except for replacing polyisocyanate P-1 obtained in Production Example 1 with polyisocyanate C-2 obtained in Comparative Production Example 2. The subsequent measurements were conducted in the same manner as in Example 1. The evaluation results are shown in Table 2.

(Comparative Example 3)

A polyisocyanate composition was obtained in the same manner as in Example 4, except for replacing polyisocyanate P-1 obtained in Production Example 1 with polyisocyanate C-3 obtained in Comparative Production Example 3. The subsequent measurements were conducted in the same manner as in Example 1. The evaluation results are shown in Table 2.

(Comparative Example 4)

A polyisocyanate composition was obtained in the same manner as in Example 4, except for replacing polyisocyanate P-1 obtained in Production Example 1 with polyisocyanate C-4 obtained in Comparative Production Example 4. The subsequent measurements were conducted in the same manner as in Example 1. The evaluation results are shown in Table 2.

(Comparative Example 5)

A polyisocyanate composition was obtained in the same manner as in Example 4, except for replacing polyisocyanate P-1 obtained in Production Example 1 with polyisocyanate C-5 obtained in Comparative Production Example 5. The subsequent measurements were conducted in the same manner as in Example 1. The evaluation results are shown in Table 2.

In Tables 1 and 2 given below, "Molar ratio B/A" denotes the value of (uretdione group absorption $\times$ 1/2)/(isocyanurate group absorption $\times$ 1/3) calculated from integrals obtained in $^{13}$C-NMR, "Molar ratio C/A" denotes the value of (uretonimino group absorption)/(isocyanurate group absorption $\times$ 1/3) calculated from integrals obtained in $^{13}$C-NMR, "Molar ratio D/A" denotes the value of (iminooxadiazinedione group absorption)/(isocyanurate group absorption $\times$ 1/3) calculated from integrals obtained in $^{13}$C-NMR, and "Molar ratio E/A" denotes the value of (allophanate group absorption)/(isocyanurate group absorption $\times$ 1/3) calculated from integrals obtained in $^{13}$C-NMR.

The polyisocyanate compositions obtained in Examples 1 to 19 and Comparative Examples 1 to 5 were evaluated as follows. The evaluation results are shown in Tables 1 and 2.

(Evaluation 1) Water dispersibility

(1) 50 ml of the polyisocyanate composition was sampled into a screw cap vial of PET in an amount of 3 g in terms of solids content, and 27 g of deionized water was added.
(2) The composition was stirred with a spatula for 1 minute, and then visual inspection was made.

The rating criteria were as follows.

A: The composition was easily dispersed, and little of the composition remained attached to the spatula.
B: The composition became viscous, and a large amount of the composition remained attached to the spatula.
C: The composition became so viscous that the stirring was difficult.

(Evaluation 2) Increase in amount of diisocyanate monomer (DI) as a result of storage

The polyisocyanate composition was stored in a nitrogen atmosphere at 40°C for 30 days, after which the diisocyanate monomer mass concentration was measured by gas chromatography under the conditions described above for the HDI monomer concentration measurement.

The increase in amount of the diisocyanate monomer as a result of storage was determined by the following calculation.

$$\text{Increase in amount (\%)} = \text{Diisocyanate monomer concentration after storage} - \text{Diisocyanate monomer concentration before storage}$$

The rating criteria were as follows.

A: 0.20 mass% or less
C: More than 0.20 mass%

(Evaluation 3) Moisture stability

40 g of the polyisocyanate composition was placed in a 50-mL glass vial, which was left uncapped in a 23°C/50%RH atmosphere for 4 hours. Subsequently, the vial was capped without nitrogen sealing. After 24 hours, the vial was uncapped again and left for another 4 hours. The same cycle was repeated 10 times, after which the viscosity was measured. The degree of increase in viscosity was determined as follows to make evaluation.

$$\text{Degree of increase in viscosity} = \text{Viscosity after 10 cycles} \div \text{Initial viscosity}$$

The rating criteria were as follows.

A: 1.06 or less
B: 1.07 or more and less than 1.10
C: 1.10 or more

[Table 1]

| | Example 1 | Example 2 | Example 3 | Example 4 | Example 5 | Example 6 | Example 7 | Example 8 | Example 9 | Example 10 | Example 11 | Example 12 |
|---|---|---|---|---|---|---|---|---|---|---|---|---|
| Starting polyisocyanate composition | P-1 | P-1 | P-1 | P-1 | P-1 | P-1 | P-1 | P-1 | P-1 | P-1 | P-1 | P-1 |
| (Physical property 1) Viscosity (mPa·s/ 25°C) | 600 | 590 | 550 | 530 | 530 | 530 | 440 | 1060 | 1290 | 610 | 730 | 860 |
| (Physical property 3) Isocyanate group content (mass%) | 15.0 | 16.2 | 17.5 | 19.8 | 21.3 | 21.9 | 22.5 | 21.8 | 19.6 | 22.8 | 22.5 | 21.9 |
| (Physical property 4) HDI monomer mass concentration (mass%) | 0.09 | 0.09 | 0.09 | 0.10 | 0.10 | 0.11 | 0.11 | 0.11 | 0.10 | 0.11 | 0.11 | 0.11 |
| (Physical property 6) Average of n | 5.1 | 5.5 | 6.1 | 9.1 | 11.8 | 15 | 16.3 | - | 8.4 | - | - | - |
| (Physical property 7) Modification degree (%) | 17.9 | 14.5 | 10.7 | 4.7 | 2.1 | 1.1 | 0.5 | 2.4 | 5.5 | 0.5 | 1.0 | 2.0 |
| (Physical property 8) Content of moiety derived from polyalkylene glycol alkyl ether (mass%) | 20.0 | 17.9 | 15.0 | 10.1 | 6.0 | 4.0 | 2.0 | - | - | - | - | - |

(continued)

| | Example 1 | Example 2 | Example 3 | Example 4 | Example 5 | Example 6 | Example 7 | Example 8 | Example 9 | Example 10 | Example 11 | Example 12 |
|---|---|---|---|---|---|---|---|---|---|---|---|---|
| Starting polyisocyanate composition | P-1 | P-1 | P-1 | P-1 | P-1 | P-1 | P-1 | P-1 | P-1 | P-1 | P-1 | P-1 |
| (Physical property 9) Phosphorus atom content (mass%) | - | - | - | - | - | - | - | 0.38 | 0.18 | - | - | - |
| (Physical property 10) Sulfur atom content (mass%) | - | - | - | - | - | - | - | - | - | 0.09 | 0.17 | 0.34 |
| (Physical property 11) Molar ratio B/A | 0.32 | 0.32 | 0.32 | 0.32 | 0.32 | 0.32 | 0.32 | 0.32 | 0.32 | 0.32 | 0.32 | 0.32 |
| (Physical property 11) Molar ratio C/A | 0.0022 | 0.0022 | 0.0022 | 0.0022 | 0.0022 | 0.0022 | 0.0022 | 0.0022 | 0.0022 | 0.0022 | 0.0022 | 0.0022 |
| (Physical property 11) Molar ratio D/A | 0.0038 | 0.0038 | 0.0038 | 0.0038 | 0.0038 | 0.0038 | 0.0038 | 0.0038 | 0.0038 | 0.0038 | 0.0038 | 0.0038 |
| (Physical property 11) Molar ratio E/A | 0.07 | 0.07 | 0.07 | 0.07 | 0.07 | 0.07 | 0.07 | 0.07 | 0.07 | 0.07 | 0.07 | 0.07 |
| (Evaluation 1) Water dispersibility | A | A | A | A | A | A | A | B | B | A | A | A |
| (Evaluation 2) Increase in amount of DI as a result of storage | A | A | A | A | A | A | A | A | A | A | A | A |

(continued)

| | Example 1 | Example 2 | Example 3 | Example 4 | Example 5 | Example 6 | Example 7 | Example 8 | Example 9 | Example 10 | Example 11 | Example 12 |
|---|---|---|---|---|---|---|---|---|---|---|---|---|
| Starting polyisocyanate composition | P-1 | P-1 | P-1 | P-1 | P-1 | P-1 | P-1 | P-1 | P-1 | P-1 | P-1 | P-1 |
| (Evaluation 3) Moisture stability | B | B | A | A | A | A | A | A | A | A | A | A |

[Table 2]

| | Example 13 | Example 14 | Example 15 | Example 16 | Example 17 | Example 18 | Example 19 | Comparative Example 1 | Comparative Example 2 | Comparative Example 3 | Comparative Example 4 | Comparative Example 5 |
|---|---|---|---|---|---|---|---|---|---|---|---|---|
| Starting polyisocyanate composition | P-1 | P-1 | P-2 | P-3 | P-4 | P-5 | P-6 | C-1 | C-2 | C-3 | C-4 | C-5 |
| (Physical property 1) Viscosity (mPa·s/25°C) | 1510 | 800 | 300 | 550 | 550 | 530 | 650 | 540 | 520 | 1110 | 1230 | 710 |
| (Physical property 3) Isocyanate group content (mass%) | 20.1 | 22.0 | 19.9 | 19.8 | 19.8 | 19.8 | 19.8 | 19.8 | 19.8 | 19.8 | 20.0 | 19.8 |
| (Physical property 4) HDI monomer mass concentration (mass%) | 0.10 | 0.11 | 0.10 | 0.11 | 0.09 | 0.08 | 0.11 | 0.09 | 0.10 | 0.08 | 0.15 | 0.14 |
| (Physical property 6) Average of n | - | 9.1 | 9.1 | 9.1 | 9.1 | 9.1 | 9.1 | 9.1 | 9.1 | 9.1 | 9.1 | 9.1 |
| (Physical property 7) Modification degree (%) | 5.0 | 1.6 | 4.7 | 4.7 | 4.7 | 4.7 | 4.7 | 4.7 | 4.7 | 4.7 | 4.7 | 4.7 |
| (Physical property 8) Content of moiety derived from polyalkylene glycol alkyl ether (mass%) | - | - | 10.1 | 10.1 | 10.1 | 10.1 | 10.1 | 10.1 | 10.1 | 10.1 | 10.1 | 10.1 |

(continued)

| | Example 13 | Example 14 | Example 15 | Example 16 | Example 17 | Example 18 | Example 19 | Comparative Example 1 | Comparative Example 2 | Comparative Example 3 | Comparative Example 4 | Comparative Example 5 |
|---|---|---|---|---|---|---|---|---|---|---|---|---|
| Starting polyisocyanate composition | P-1 | P-1 | P-2 | P-3 | P-4 | P-5 | P-6 | C-1 | C-2 | C-3 | C-4 | C-5 |
| (Physical property 9) Phosphorus atom content (mass%) | - | - | - | - | - | - | - | - | - | - | - | - |
| (Physical property 10) Sulfur atom content (mass%) | 0.81 | 0.09 | - | - | - | - | - | - | - | - | - | - |
| (Physical property 11) Molar ratio B/A | 0.32 | 0.32 | 0.370 | 0.250 | 0.280 | 0.350 | 0.290 | 0.300 | 0.420 | 0.012 | 0.270 | 0.290 |
| (Physical property 11) Molar ratio C/A | 0.0022 | 0.0022 | 0.0026 | 0.0013 | 0.0018 | 0.0036 | 0.0041 | 0.0008 | 0.0055 | 0.0001> | 0.0190 | 0.0063 |
| (Physical property 11) Molar ratio D/A | 0.0038 | 0.0038 | 0.0055 | 0.0018 | 0.0023 | 0.0072 | 0.1080 | 0.0023 | 0.0085 | 0.0019 | 0.5900 | 0.1780 |
| (Physical property 11) Molar ratio E/A | 0.07 | 0.07 | 0.230 | 0.070 | 0.070 | 0.070 | 0.060 | 0.070 | 0.070 | 0.070 | 0.0001> | 0.050 |
| (Evaluation 1) Water dispersibility | B | A | A | A | A | A | A | A | A | B | B | A |

(continued)

| | Example 13 | Example 14 | Example 15 | Example 16 | Example 17 | Example 18 | Example 19 | Comparative Example 1 | Comparative Example 2 | Comparative Example 3 | Comparative Example 4 | Comparative Example 5 |
|---|---|---|---|---|---|---|---|---|---|---|---|---|
| Starting polyisocyanate composition | P-1 | P-1 | P-2 | P-3 | P-4 | P-5 | P-6 | C-1 | C-2 | C-3 | C-4 | C-5 |
| (Evaluation 2) Increase in amount of DI as a result of storage | A | A | A | A | A | A | A | A | C | A | C | C |
| (Evaluation 3) Moisture stability | A | A | A | B | B | B | B | C | B | C | B | B |

(Production Example 11 (production of aqueous dispersion of acrylic polyol))

A four-necked separable flask equipped with a stirrer, a thermometer, a reflux condenser tube, a nitrogen inlet tube, and a dropping funnel was used as a reactor. A nitrogen atmosphere was created in the reactor, into which 300 parts by mass of ethylene glycol monobutyl ether was introduced. The internal temperature of the reactor was maintained at 80°C while the ethylene glycol monobutyl ether was stirred. 146.3 parts by mass of methyl methacrylate, 105 parts by mass of styrene, 257.6 parts by mass of n-butyl acrylate, 14 parts by mass of methacrylic acid, and 177.1 parts by mass of 2-hydroxyethyl methacrylate were used as monomers and homogeneously mixed with 0.7 parts by mass of 2,2'-azobisisobutyronitrile as a polymerization initiator and 0.3 parts by mass of n-dodecyl mercaptan as a chain transfer agent, and the mixture was introduced into the reactor continuously at a constant rate over 4.5 hours. After that, the internal temperature of the reactor was maintained at 80°C for 2 hours. Subsequently, the mixture in the reactor was cooled, 11.6 parts by mass of a 25 mass% aqueous solution of ammonia was added to the mixture, which was stirred for 15 hours. Further, while the mixture in the reactor was stirred, 1300 parts by mass of ion-exchanged water was added, yielding an aqueous dispersion. The resulting aqueous dispersion was concentrated using a rotary evaporator until a solids content of about 45 mass% was reached. After that, the pH of the resulting concentrate was adjusted with a 25 mass% aqueous solution of ammonia to 8.0. Thus, an aqueous dispersion of acrylic polyol was obtained. For the obtained aqueous dispersion of acrylic polyol, the average particle size of particles in the aqueous dispersion was 90 nm, the hydroxyl group concentration of the polyol resin component was 3.3 mass% as calculated from the amounts of the introduced starting materials, and the number average molecular weight of the polyol resin component was 9600.

(Examples 20 to 38 and Comparative Examples 6 to 10)

Coating compositions were prepared as follows using the polyisocyanate compositions obtained in Examples 1 to 19 and Comparative Examples 1 to 5.

[Preparation of coating composition]

40 g of the aqueous polyol dispersion prepared in Production Example 11 was weighed into a vessel. 3.0 g of a mixture prepared beforehand by mixing 15 parts of Byk 348 as a leveling agent, 19 parts of Tego Wet 270, and 266 parts of ethylene glycol monobutyl ether acetate was added, and 3.2 g of a mixture prepared beforehand by mixing 37.5 parts of Disperbyk 192 as a dispersant and 62.5 parts of propylene glycol-n-propyl ether was further added. The contents of the vessel were stirred with a dispersion blade at 600 rpm for 3 minutes. A polyisocyanate composition was then added in such an amount that the molar ratio NCO/OH of the isocyanate groups in the polyisocyanate composition to the hydroxyl groups in the aqueous polyol dispersion would be 1.25. A mixture was thus obtained. Deionized water was added to the mixture in such an amount that the solids content of the resulting coating composition would be 44 mass%. The mixture was then stirred with a dispersion blade at 600 rpm for 10 minutes to prepare a coating composition. The coating composition thus prepared was used to make the following evaluations of a coating. The evaluation results are shown in Tables 3 and 4.

(Evaluation 4) Appearance of coating

A 40-μm-thick coating was formed on a glass plate using the above coating composition and calcined at 60°C for 30 minutes. The 20° gloss of the resulting coating was measured using "haze-gloss version 3.40" (trade name) manufactured by BYK Gardner. A measured value for a standard black glass plate with a refractive index of 1.567 was defined as 100 gloss units. The 20° gloss of the glass plate alone used for the coating formation was measured to be 174. The rating criteria were as follows.

| | |
|---|---|
| AA: | 160 or more |
| A: | 150 or more and less than 160 |
| B: | 100 or more and less than 150 |
| C: | Less than 100 |

(Evaluation 5) Hardness of coating

A 40-μm-thick coating was formed on a glass plate using the above coating composition and calcined at 60°C for 30 minutes. The glass plate with the coating was cooled in a 23°C/50%RH atmosphere. On the next day, the hardness of the resulting coating was measured using a Konig hardness tester (manufactured by BYK Garder under the trade

name "Pendulum hardness tester"). The rating criteria were as follows.

AA: 50 or more
A: 40 or more and less than 50
B: 30 or more and less than 40
C: Less than 30

(Evaluation 6) Surface drying property of coating

A 40-μm-thick coating was formed on a glass plate using the above coating composition and dried in a 23°C/50%RH atmosphere. After 4 hours, a cylindrical cotton with a diameter of 2.5 cm and a height of 2.0 cm was placed on the resulting coating, and a 100-g weight was placed on the cotton for 60 seconds. After that, the weight and cotton were removed, and the trace of the cotton left on the coating was inspected. The rating criteria were as follows.

AA: Having no trace of the cotton.
A: Having a slight trace of the cotton.
B: Having a somewhat marked trace of the cotton.
C: Having a significantly marked trace of the cotton.

(Evaluation 7) Solvent resistance of coating

A 40-μm-thick coating was formed on a glass plate using the above coating composition, calcined at 60°C for 30 minutes, and then cooled in a 23°C/50%RH atmosphere. On the next day, a 10-mm-diameter cotton ball impregnated with 1 g of xylene was placed on the resulting coating for 5 minutes, after which xylene remaining on the surface of the coating was removed and then the condition of the coating was observed. The rating criteria were as follows.

AA: Transparent and undented.
A: Slightly cloudy or slightly dented.
B: Somewhat cloudy or somewhat dented.
C: Significantly cloudy or significantly dented.

(Evaluation 8) Water resistance of coating

A 40-μm-thick coating was formed on an Alodine-treated aluminum plate using the above coating composition, calcined at 60°C for 30 minutes, and then cooled in a 23°C/50%RH atmosphere. On the next day, a 30-mm-diameter O-ring made of silicone was placed on the resulting coating, and 0.5 g of water was poured inside the O-ring. The coating was left in this state at 23°C for 24 hours, after which water remaining on the surface of the coating was removed and then the condition of the coating was observed. The rating criteria were as follows.

AA: Transparent and unblistered.
A: Slightly cloudy or slightly blistered.
B: Somewhat cloudy or somewhat blistered.
C: Significantly cloudy or significantly blistered.

(Evaluation 9) Adhesion of coating

A 40-μm-thick coating was formed on a polycarbonate plate (PC-1600, manufactured by C.I. TAKIRON Corporation) using the above coating composition, calcined at 60°C for 30 minutes, and then cooled in a 23°C/50%RH atmosphere. On the next day, the resulting coating was subjected to an adhesion test according to JIS K 5600-5-6 and evaluated by the number of coating segments peeled from the plate. The rating criteria were as follows.

AA: 0 or more and less than 10 coating segments.
A: 10 or more and less than 20 coating segments.
B: 20 or more and less than 50 coating segments.

(continued)

C: 50 or more coating segments.

(Evaluation 10) Water resistant adhesion of coating

A 40-μm-thick coating was formed on a polycarbonate plate (PC-1600, manufactured by C.I. TAKIRON Corporation) using the above coating composition, calcined at 60°C for 30 minutes, and then cooled in a 23°C/50%RH atmosphere. On the next day, a 30-mm-diameter O-ring made of silicone was placed on the resulting coating, and 0.5 g of water was poured inside the O-ring. The coating was left in this state at 23°C for 24 hours, after which water remaining on the surface of the coating was removed. The wet portion of the coating was subjected to an adhesion test according to JIS K 5600-5-6 and evaluated by the number of coating segments peeled from the plate.
The rating criteria were as follows.

AA: 0 or more and less than 10 coating segments.
A: 10 or more and less than 20 coating segments.
B: 20 or more and less than 50 coating segments.
C: 50 or more coating segments.

[Table 3]

| | Example 20 | Example 21 | Example 22 | Example 23 | Example 24 | Example 25 | Example 26 | Example 27 | Example 28 | Example 29 | Example 30 | Example 31 |
|---|---|---|---|---|---|---|---|---|---|---|---|---|
| Polyisocyanate composition used | Example 1 | Example 2 | Example 3 | Example 4 | Example 5 | Example 6 | Example 7 | Example 8 | Example 9 | Example 10 | Example 11 | Example 12 |
| (Evaluation 4) Appearance of coating | AA | AA | AA | AA | AA | A | B | A | A | A | AA | AA |
| (Evaluation 5) Hardness of coating | B | A | AA | AA | AA | AA | AA | AA | AA | AA | AA | AA |
| (Evaluation 6) Surface drying property of coating | B | A | A | A | A | A | A | A | A | AA | AA | AA |
| (Evaluation 7) Solvent resistance of coating | A | A | AA | AA | AA | AA | AA | AA | AA | AA | AA | AA |
| (Evaluation 8) Water resistance of coating | B | A | AA | AA | AA | AA | AA | A | A | AA | AA | AA |
| (Evaluation 9) Adhesion of coating | AA | AA | AA | AA | AA | AA | AA | AA | AA | AA | AA | AA |
| (Evaluation 10) Water resistant adhesion of coating | A | A | AA | AA | AA | AA | AA | A | A | AA | AA | AA |

[Table 4]

| | Example 32 | Example 33 | Example 34 | Example 35 | Example 36 | Example 37 | Example 38 | Comparative Example 6 | Comparative Example 7 | Comparative Example 8 | Comparative Example 9 | Comparative Example 10 |
|---|---|---|---|---|---|---|---|---|---|---|---|---|
| Polyisocyanate composition used | Example 13 | Example 14 | Example 15 | Example 16 | Example 17 | Example 18 | Example 19 | Comparative Example 1 | Comparative Example 2 | Comparative Example 3 | Comparative Example 4 | Comparative Example 5 |
| (Evaluation 4) Appearance of coating | A | AA | AA | AA | AA | AA | AA | AA | AA | AA | AA | AA |
| (Evaluation 5) Hardness of coating | AA | AA | AA | AA | AA | AA | AA | AA | AA | AA | AA | AA |
| (Evaluation 6) Surface drying property of coating | A | A | A | A | A | A | A | A | A | A | A | A |
| (Evaluation 7) Solvent resistance of coating | AA | AA | AA | AA | AA | AA | AA | AA | AA | AA | AA | AA |
| (Evaluation 8) Water resistance of coating | A | AA | AA | AA | AA | AA | AA | AA | AA | AA | AA | AA |
| (Evaluation 9) Adhesion of coating | AA | AA | AA | AA | AA | AA | AA | AA | A | C | B | A |
| (Evaluation 10) Water resistant adhesion of coating | A | AA | AA | AA | AA | AA | AA | AA | A | C | B | A |

The present application is based on Japanese Patent Application (Japanese Patent Application No. 2016-045987) filed with Japan Patent Office on March 9, 2016.

## Claims

1. A polyisocyanate composition obtained by a reaction between a starting polyisocyanate composition comprising a polyisocyanate having an aliphatic diisocyanate unit and a hydrophilic compound,
the polyisocyanate composition comprising an isocyanurate group, an uretdione group, an uretonimino group, and an iminooxadiazinedione group, wherein
the molar ratio of the uretonimino group to the isocyanurate group is 0.0010 or more and 0.0050 or less, and the molar ratio of the iminooxadiazinedione group to the isocyanurate group is 0.00050 or more and 0.30 or less.

2. The polyisocyanate composition according to claim 1, wherein the hydrophilic compound is at least one selected from the group consisting of an anionic compound, a cationic compound, and a nonionic compound.

3. The polyisocyanate composition according to claim 2, wherein
the hydrophilic compound comprises the anionic compound, and
the anionic compound is at least one selected from the group consisting of a carboxylic acid group-containing compound, a phosphoric acid group-containing compound, and a sulfonic acid group-containing compound.

4. The polyisocyanate composition according to claim 3, wherein
the anionic compound comprises the sulfonic acid group-containing compound, and
the sulfonic acid group-containing compound is at least one selected from the group consisting of a hydroxy group-containing sulfonic acid and an amino group-containing sulfonic acid.

5. The polyisocyanate composition according to claim 2, wherein
the hydrophilic compound comprises the nonionic compound, and
the nonionic compound is a polyalkylene glycol alkyl ether having a structure represented by following general formula (1):

$$HO\left(R_1O\right)_n R_2 \qquad (1)$$

wherein $R_1$ represents an alkylene group having 1 to 4 carbon atoms, $R_2$ represents an alkyl group having 1 to 4 carbon atoms, and an average of n is 5.0 or more and 20 or less.

6. The polyisocyanate composition according to claim 5, wherein, in general formula (1), $R_1$ represents an alkylene group having two carbon atoms and $R_2$ represents an alkyl group having one carbon atom.

7. The polyisocyanate composition according to claim 5 or 6, wherein a moiety derived from the polyalkylene glycol alkyl ether is comprised in an amount of 2.0 mass% or more and 30 mass% or less based on a total amount of the polyisocyanate composition.

8. The polyisocyanate composition according to any one of claims 1 to 7, wherein the aliphatic diisocyanate unit comprises a 1,6-diisocyanatohexane unit.

9. A coating composition comprising the polyisocyanate composition according to any one of claims 1 to 8.

10. An aqueous coating composition comprising the coating composition according to claim 9 and water.

11. A coated substrate comprising a substrate and the coating composition according to claim 9 or the aqueous coating composition according to claim 10, the coating composition or the aqueous coating composition coating the substrate.

## Patentansprüche

1. Polyisocyanatzusammensetzung, welche durch eine Reaktion zwischen einer Ausgangs-Polyisocyanatzusammensetzung, welche ein Polyisocyanat umfasst, das eine aliphatische Diisocyanateinheit aufweist, und einer hydrophile Verbindung erhalten wird,
wobei die Polyisocyanatzusammensetzung eine Isocyanuratgruppe, eine Uretdiongruppe, eine Uretoniminogruppe und eine Iminooxadiazindiongruppe umfasst, wobei
das Molverhältnis der Uretoniminogruppe zu der Isocyanuratgruppe 0,0010 oder mehr und 0,0050 oder weniger ist und das Molverhältnis der Iminooxadiazindiongruppe zu der Isocyanuratgruppe 0,00050 oder mehr und 0,30 oder weniger ist.

2. Polyisocyanatzusammensetzung nach Anspruch 1, wobei die hydrophile Verbindung mindestens eine ist, ausgewählt aus der Gruppe bestehend aus einer anionischen Verbindung einer kationischen Verbindung und einer nichtionischen Verbindung.

3. Polyisocyanatzusammensetzung nach Anspruch 2, wobei
die hydrophile Verbindung die anionische Verbindung umfasst, und
die anionische Verbindung mindestens eine ist, ausgewählt aus der Gruppe bestehend aus einer Carbonsäuregruppe-enthaltenden Verbindung, einer Phosphorsäuregruppe-enthaltenden Verbindung und einer Schwefelsäuregruppe-enthaltenden Verbindung.

4. Polyisocyanatzusammensetzung nach Anspruch 3, wobei
die anionische Verbindung die Schwefelsäuregruppe-enthaltenden Verbindung umfasst, und
die Schwefelsäuregruppe-enthaltenden Verbindung mindestens eine ist, ausgewählt aus der Gruppe bestehend aus einer Hydroxylgruppe-enthaltenden Schwefelsäure und einer Aminogruppe-enthaltenden Schwefelsäure.

5. Polyisocyanatzusammensetzung nach Anspruch 2, wobei
die hydrophile Verbindung die nichtionische Verbindung umfasst und
die nichtionische Verbindung ein Polyalkylenglycolalkylether mit einer Struktur der nachfolgenden allgemeinen Formel (1) ist:

$$HO\left(R_1O\right)_n R_2 \qquad (1)$$

wobei $R_1$ eine Alkylengruppe mit 1 bis 4 Kohlenstoffatomen darstellt, $R_2$ eine Alkylgruppe mit 1 bis 4 Kohlenstoffatomen darstellt und der Durchschnitt von n 5,0 oder mehr und 20 oder weniger ist.

6. Polyisocyanatzusammensetzung nach Anspruch 5, wobei in der allgemeinen Formel (1) $R_1$ eine Alkylengruppe mit zwei Kohlenstoffatomen darstellt und $R_2$ eine Alkylgruppe mit einem Kohlenstoffatom darstellt.

7. Polyisocyanatzusammensetzung nach Anspruch 5 oder 6, wobei ein von dem Polyalkylenglycolether abgeleiteter Rest in einer Menge von 2,0 Massen-% oder mehr und 30 Massen-% oder weniger enthalten ist, bezogen auf die Gesamtmenge der Polyisocyanatzusammensetzung.

8. Polyisocyanatzusammensetzung nach einem der Ansprüche 1 bis 7, wobei die aliphatische Diisocyanateinheit eine 1,6-Diisocyanatohexaneeinheit umfasst.

9. Beschichtungszusammensetzung, welche die Polyisocyanatzusammensetzung nach einem der Ansprüche 1 bis 8 enthält.

10. Wässrige Beschichtungszusammensetzung, welche die Beschichtungszusammensetzung nach Anspruch 9 und Wasser enthält.

11. Beschichtetes Substrat, umfassend ein Substrat und die Beschichtungszusammensetzung nach Anspruch 9 oder die wässrige Beschichtungszusammensetzung nach Anspruch 10 umfasst, wobei die Beschichtungszusammensetzung oder die wässrige Beschichtungszusammensetzung das Substrat beschichtet.

## Revendications

1. Composition de polyisocyanate obtenue par une réaction entre une composition de polyisocyanate de départ comprenant un polyisocyanate présentant une unité de diisocyanate aliphatique et un composé hydrophile,
la composition de polyisocyanate comprenant un groupe isocyanurate, un groupe uretdione, un groupe urétonimino et un groupe iminooxadiazinedione, dans laquelle
le rapport molaire entre le groupe urétonimino et le groupe isocyanurate est de 0,0010 ou plus et de 0,0050 ou moins, et le rapport molaire entre le groupe iminooxadiazinedione et le groupe isocyanurate est de 0,00050 ou plus et de 0,30 ou moins.

2. Composition de polyisocyanate selon la revendication 1, dans laquelle le composé hydrophile est au moins un choisi dans le groupe constitué d'un composé anionique, d'un composé cationique et d'un composé non ionique.

3. Composition de polyisocyanate selon la revendication 2, dans laquelle
le composé hydrophile comprend le composé anionique, et
le composé anionique est au moins un choisi dans le groupe constitué d'un composé contenant un groupe acide carboxylique, d'un composé contenant un groupe acide phosphorique et d'un composé contenant un groupe acide sulfonique.

4. Composition de polyisocyanate selon la revendication 3, dans laquelle
le composé anionique comprend le composé contenant un groupe acide sulfonique, et
le composé contenant un groupe acide sulfonique est au moins un choisi dans le groupe constitué d'un acide sulfonique contenant un groupe hydroxy et d'un acide sulfonique contenant un groupe amino.

5. Composition de polyisocyanate selon la revendication 2, dans laquelle
le composé hydrophile comprend le composé non ionique, et
le composé non ionique est un éther alkylique de polyalkylène glycol ayant une structure représentée par la formule générale (1) suivante :

$$HO\left(R_1O\right)_n R_2 \qquad (1)$$

dans laquelle $R_1$ représente un groupe alkylène comportant de 1 à 4 atomes de carbone, $R_2$ représente un groupe alkyle comportant de 1 à 4 atomes de carbone et une moyenne de n est de 5,0 ou plus et de 20 ou moins.

6. Composition de polyisocyanate selon la revendication 5, dans laquelle, dans la formule générale (1), $R_1$ représente un groupe alkylène comportant deux atomes de carbone et $R_2$ représente un groupe alkyle comportant un atome de carbone.

7. Composition de polyisocyanate selon la revendication 5 ou 6, dans laquelle un groupement dérivé de l'éther alkylique de polyalkylène glycol est compris en une quantité de 2,0 % en masse ou plus et de 30 % en masse ou moins sur la base d'une quantité totale de la composition de polyisocyanate.

8. Composition de polyisocyanate selon l'une quelconque des revendications 1 à 7, dans laquelle l'unité de diisocyanate aliphatique comprend une unité de 1,6-diisocyanatohexane.

9. Composition de revêtement comprenant la composition de polyisocyanate selon l'une quelconque des revendications 1 à 8.

10. Composition aqueuse de revêtement comprenant la composition de revêtement selon la revendication 9 et de l'eau.

11. Substrat revêtu comprenant un substrat et la composition de revêtement selon la revendication 9 ou la composition aqueuse de revêtement selon la revendication 10, la composition de revêtement ou la composition aqueuse de revêtement revêtant le substrat.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 5222150 A
- JP 7330861 A
- JP 2007332193 A
- JP 2016045987 A